# EUROPEAN PATENT SPECIFICATION

(11) **EP 4 335 278 B1**
(45) Date of publication and mention of the grant of the patent: **01.07.2026**
(21) Application number: 22891576.5
(22) Date of filing: 25.08.2022
(51) Int. Cl.: A01D 34/66, A01D 34/78, A01D 69/02

(54) **RIDE-ON LAWN MOWING APPARATUS**
RASENMÄHVORRICHTUNG ZUM AUFFAHREN
TONDEUSE AUTOPORTÉE

(30) Priority: 12.11.2021 CN 202111338153; 12.11.2021 CN 202111338145; 12.11.2021 CN 202111338143; 12.11.2021 CN 202111338560; 12.11.2021 CN 202111338576; 12.11.2021 CN 202111338541; 12.11.2021 CN 202111338141; 12.11.2021 CN 202111338504
(43) Date of publication of application: 13.03.2024
(73) Proprietor: Nanjing Chervon Industry Co., Ltd., Nanjing, Jiangsu 211106 (CN)
(72) Inventor: LI, Li, Nanjing, Jiangsu 211106 (CN); WEI, Tianfang, Nanjing, Jiangsu 211106 (CN); GAO, Fan, Nanjing, Jiangsu 211106 (CN); CHEN, Liang, Nanjing, Jiangsu 211106 (CN); XU, Haishen, Nanjing, Jiangsu 211106 (CN); GAO, Ming, Nanjing, Jiangsu 211106 (CN); ZHANG, Min, Nanjing, Jiangsu 211106 (CN); ZHANG, Tao, Nanjing, Jiangsu 211106 (CN); HUANG, Jiajun, Nanjing, Jiangsu 211106 (CN); GAO, Yunfei, Nanjing, Jiangsu 211106 (CN)
(74) Representative: Sun, Yiming
(86) International application number: PCT/CN2022/114756
(87) International publication number: WO 2023/082770

(56) References cited:
- WO-A1-2023/064381
- CN-A- 107 567 411
- CN-A- 113 115 626
- CN-U- 203 402 299
- CN-U- 211 376 751
- CN-U- 212 034 865
- CN-U- 212 034 865
- US-A1- 2014 298 767
- US-A1- 2015 359 168
- US-A1- 2018 146 615
- US-A1- 2020 205 343

## Description

### TECHNICAL FIELD

The present invention relates to garden tools, for example, a riding mowing device.

### BACKGROUND

As a garden tool, a riding mowing device is widely used in the field of trimming lawns and vegetation. A lawn tractor is more labor-saving and more efficient in mowing than a push mower. On the market, the lawn tractor usually uses diesel as the energy supply, which not only makes a lot of noise and pollutes the environment, but also requires frequent replacement of wearing parts in a fuel system, resulting in increased maintenance costs. In addition, due to the relatively large size of a fuel engine, the lawn tractor on the market usually has a relatively high front cover, resulting in a relatively large front blind spot; further, due to the relatively heavy weight of the fuel engine, the lawn tractor on the market usually has a relatively large front wheel load, making steering laborious and inflexible.

CN212034865U discloses a riding type mower which comprises a seat for a user to sit on; the main rack is arranged to bear the seat; the mowing element is arranged to cut vegetation; the walking assembly is arranged to be a riding type mower to walk; the operation assembly is operated by a user to control walking and power output of the riding type mower; the power supply device is arranged at the rear end of the main rack; the power supply device comprises a battery pack capable of providing energy and a battery bin used for containing the battery pack. The battery compartment comprises a main compartment for accommodating the battery pack and a compartment cover for at least partially sealing the main compartment; the bin cover is further provided with a buckle locked to the main bin chamber. A matched limiting part is formed in the main bin chamber; the buckle comprises a locking part, the side, facing the limiting part, of the locking part comprises a first edge and a second edge, and the included angle between the first edge and the second edge is larger than or equal to 60 degrees and smaller than or equal to 90 degrees. The power supply device of the riding type mower is convenient to operate.

US2020205343A1 discloses an electric grass cutting machine. An electric motor for driving a traveling device having a pair of left and right front wheels and a pair of left and right rear wheels and a gear transmission for speed-changing output from the electric motor and transmitting the resultant power to the traveling device are disposed between the left and right rear wheels and arranged one after the other in the front/rear direction at positions laterally of a conveying duct for guiding cut grass pieces from a rear discharge type mower device to a grass collecting container supported to a rear portion of a machine body frame.

### SUMMARY

To solve the preceding problems, the present invention is set out in the appended set of claims.

### BRIEF DESCRIPTION OF DRAWINGS

FIG. 1 is a perspective view of a lawn tractor according to an example of the present invention;
FIG. 2 is a side view of the lawn tractor in FIG. 1;
FIG. 3 is a bottom view of the lawn tractor in FIG. 1;
FIG. 4 is a side view of the lawn tractor in FIG. 1 to which a grass collecting system is mounted;
FIG. 5 is a perspective view of the lawn tractor in FIG. 1 with a front cover open;
FIG. 6 is a side view of the lawn tractor in FIG. 1 with a front cover open;
FIG. 7A is a schematic diagram of a power supply assembly according to an example of the present invention;
FIG. 7B is a schematic diagram of a power supply assembly according to another example of the present invention;
FIG. 7C is a schematic diagram of a power supply assembly according to another example of the present invention;
FIG. 8A is a perspective view of a lawn tractor with a front cover open according to another example of the present invention;
FIG. 8B is a perspective view of a lawn tractor with a front cover open according to another example of the present invention;
FIG. 8C is a perspective view of a lawn tractor with a front cover open according to another example of the present invention;
FIG. 9A is a schematic diagram of a power supply assembly and a storage space according to an example of the present invention;
FIG. 9B is a schematic diagram of a power supply assembly and a storage space according to another example of the present invention;
FIG. 9C is a schematic diagram of a power supply assembly and a storage space according to another example of the present invention;
FIG. 9D is a schematic diagram of a power supply assembly and a storage space according to another example of the present invention;
FIG. 9E is a schematic diagram of a power supply assembly and a storage space according to another example of the present invention;
FIG. 9F is a schematic diagram of a power supply assembly and a storage space according to another example of the present invention;
FIG. 10 is a perspective view of the partial structure of the lawn tractor in FIG. 1;
FIG. 11 is a perspective view of a control panel of the lawn tractor in FIG. 1;
FIG. 12 is a perspective view of the lawn tractor in FIG. 1 with pedals removed;
FIG. 13 is a schematic diagram of a system of a lawn tractor according to an example of the present invention;
FIG. 14 is a perspective view of a steering assembly of the lawn tractor in FIG. 1;
FIG. 15 is a bottom view of the steering assembly in FIG. 14;
FIG. 16A is a front view of a support rod and a support bracket of the steering assembly in FIG. 14;
FIG. 16B is a sectional view of a support rod and a support bracket of the steering assembly in FIG. 14;
FIG. 17A is a perspective view of a cutting deck height adjustment assembly according to an example of the present invention;
FIG. 17B is a perspective view of a cutting deck height adjustment assembly according to another example of the present invention;
FIG. 18 is a side view of the structure in FIG. 17A;
FIG. 19 is a front view of a seat support member according to an example of the present invention;
FIG. 20 is a perspective view of the partial structure of the lawn tractor in FIG. 1;
FIG. 21 is a perspective view of a grass collecting system and a cutting assembly of the lawn tractor in FIG. 4;
FIG. 22 is a side view of the structure in FIG. 21;
FIG. 23 is a perspective view of a mounting assembly according to an example of the present invention; and
FIG. 24 is a perspective view of a sun shade assembly according to an example of the present invention.

### DETAILED DESCRIPTION

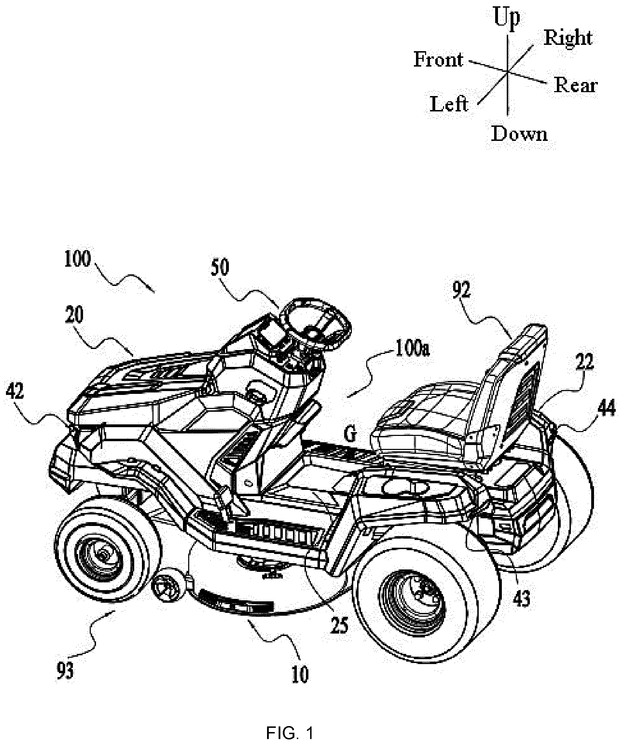

As shown in FIG. 1, a riding mowing device in the present disclosure is a lawn tractor 100. A user may sit on the lawn tractor 100 to control the lawn tractor 100 to trim lawns and other vegetation.

In this specification, directions such as the front, rear, left, right, up, and down are described as directions shown in FIG. 1. Specifically, when the user sits on the lawn tractor 100 on the ground, it is defined that a direction which the user faces is the front, a direction which the user faces away from is the rear, a direction on the left-hand side of the user is the left, a direction on the right-hand side of the user is the right, a direction facing the ground is the down, and a direction facing away from the ground is the up.

As shown in FIGS. 1 to 4, the lawn tractor 100 includes a cutting assembly 10, a frame 91, a seat 92, a housing system 20, a traveling assembly 93, a power supply assembly 96, an illumination system 40, and an operating assembly 50. The frame 91 and the housing system 20 form a body 100a of the lawn tractor 100. The body 100a is used for mounting the cutting assembly 10, the seat 92, the power supply assembly 96, and the illumination system 40. The traveling assembly 93 is used for supporting the body 100a. In the lawn tractor 100, a power assembly supplies energy to the cutting assembly 10, the traveling assembly 93, the illumination system 40, and the like. In this example, the power assembly of the lawn tractor 100 is the power supply assembly 96, and the power supply assembly 96 supplies electrical energy to each assembly of the lawn tractor 100 so that the lawn tractor 100 can be used as a power tool. The electric lawn tractor 100 is more environmentally friendly and more energy-efficient than a fuel-based lawn tractor 100.

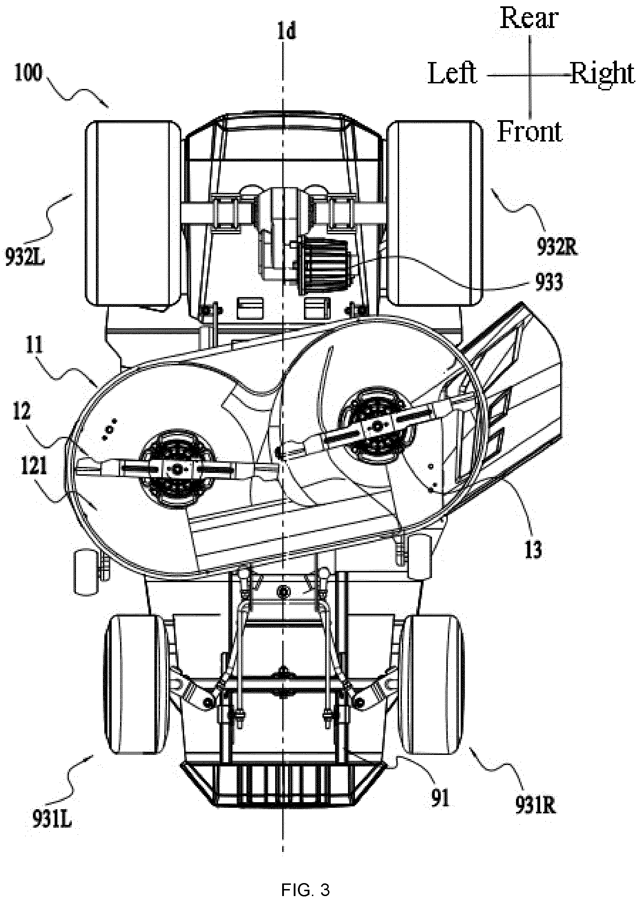

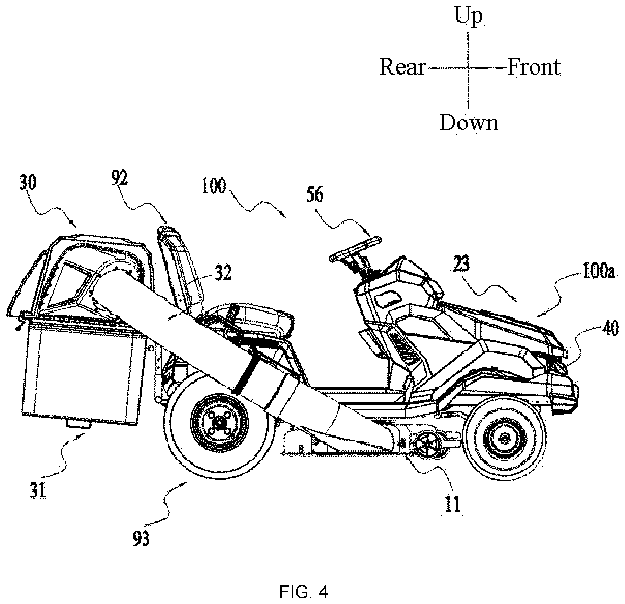

The cutting assembly 10 is used for outputting power to implement the function of the lawn tractor 100. The cutting assembly 10 serves as a power output member, and the body 100a supports the power output member. The cutting assembly 10 includes a cutting deck 11, mowing elements 12, and first motors 13. The mowing elements 12 are used for cutting the vegetation when the mowing elements 12 rotate at a high speed. For example, the mowing elements 12 are blades for cutting grass on a lawn. The cutting deck 11 surrounds a mowing space 121 for accommodating at least part of the mowing elements 12, that is to say, the mowing elements 12 are at least partially accommodated in the cutting deck 11. The first motors 13 are used for driving the mowing elements 12 to rotate. As shown in FIG. 3, the cutting assembly 10 is disposed below the frame 91. In an example, two mowing elements 12 may be provided, two first motors 13 may be provided, and correspondingly, the two first motors 13 separately drive the two mowing elements 12. In an example, three mowing elements 12 may be provided, three first motors 13 may be provided, and correspondingly, the three first motors 13 separately drive the three mowing elements 12. The mowing elements 12 are located in the mowing space 121 surrounded by the cutting deck 11. The mowing space 121 is open downward so that the mowing elements 12 can perform the cutting operation on the vegetation below the mowing space 121. As shown in FIG. 4, the lawn tractor 100 may further include a grass collecting system 30, that is, the user may selectively mount the grass collecting system 30, and the grass collecting system 30 is used for collecting grass clippings cut by the cutting assembly 10. The grass collecting system 30 includes a grass collecting basket assembly 31 detachably mounted behind the seat 92. The seat 92 includes a seat cushion 921 and a backrest 922. The seat cushion 921 is used for the user to sit on, and the backrest 922 is used for supporting the back of the user. Therefore, in other words, the grass collecting basket assembly 31 is mounted behind the backrest 922.

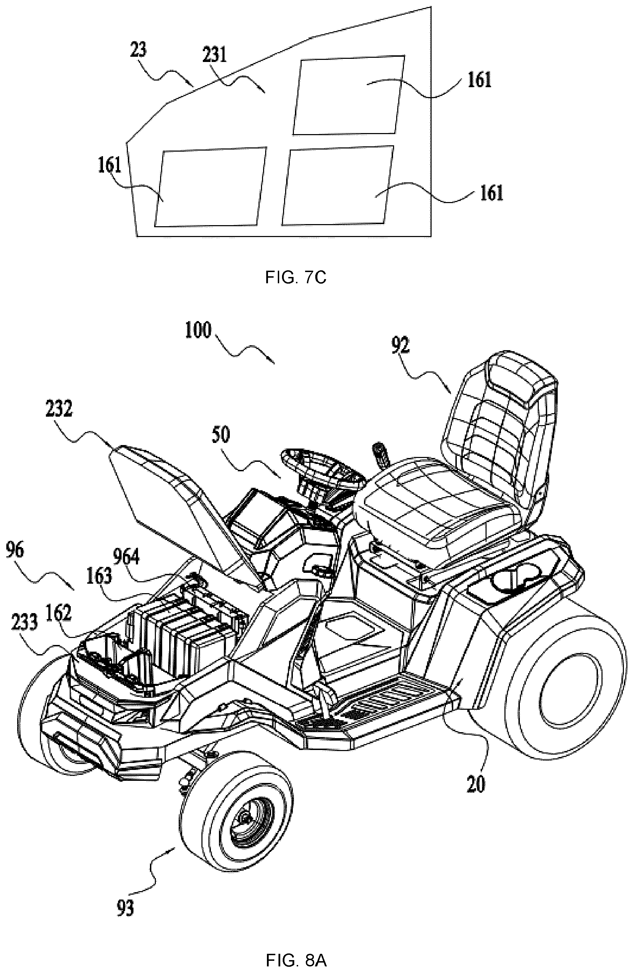

As shown in FIGS. 8A to 8C, the cutting assembly 10 may be detached from the lawn tractor 100. At this time, the lawn tractor 100 may be connected to other work attachments, such as a snow shoveling assembly. The snow shoveling assembly includes a snow shovel and a snow shovel angle adjustment device, and the snow shoveling assembly may be hooked to the frame 91. In this case, strictly speaking, the lawn tractor 100 is no longer just a riding mowing device, but a riding vehicle that can perform different tasks according to different connected work attachments. In an example, the lawn tractor 100 is provided with at least one work attachment interface, such as a hook, threads, a hole, or a groove, and due to the strong load-bearing capacity of the frame 91, at least one work attachment interface may be formed on or fixed to the frame 91. Different work attachment interfaces are used for matching different work attachments, and the same work attachment interface may match different work attachments.

The frame 91 extends basically along the front and rear direction. The cutting assembly 10, the housing system 20, the traveling assembly 93, the power supply assembly 96, the grass collecting system 30, and the illumination system 40 are all mounted to the frame 91. The frame 91 is used for supporting the body 100a of the entire lawn tractor 100. The traveling assembly 93 is used for supporting the frame 91 so that the lawn tractor 100 can travel on the ground, and the traveling assembly 93 includes a first traveling assembly 931 and a second traveling assembly 932. In this example, the first traveling assembly 931 is a front traveling assembly and includes two first traveling wheels (front wheels) which are a left first traveling wheel 931L and a right first traveling wheel 931R; and the second traveling assembly 932 is a rear traveling assembly and includes two second traveling wheels (rear wheels) which are a left second traveling wheel 932L and a right second traveling wheel 932R. The radius of the second traveling wheel is greater than the radius of the first traveling wheel. The left first traveling wheel 931L and the right first traveling wheel 931R are connected through a front axle 934, and the left second traveling wheel 932L and the right second traveling wheel 932R are connected through a rear axle. The traveling assembly 93 further includes a second motor 933 for driving the second traveling assembly 932. In an example, the rear axle further includes a differential. When the lawn tractor 100 turns or travels on an uneven road surface, the differential enables the left second traveling wheel 932L and the right second traveling wheel 932R driven by the second motor 933 to rotate at different speeds.

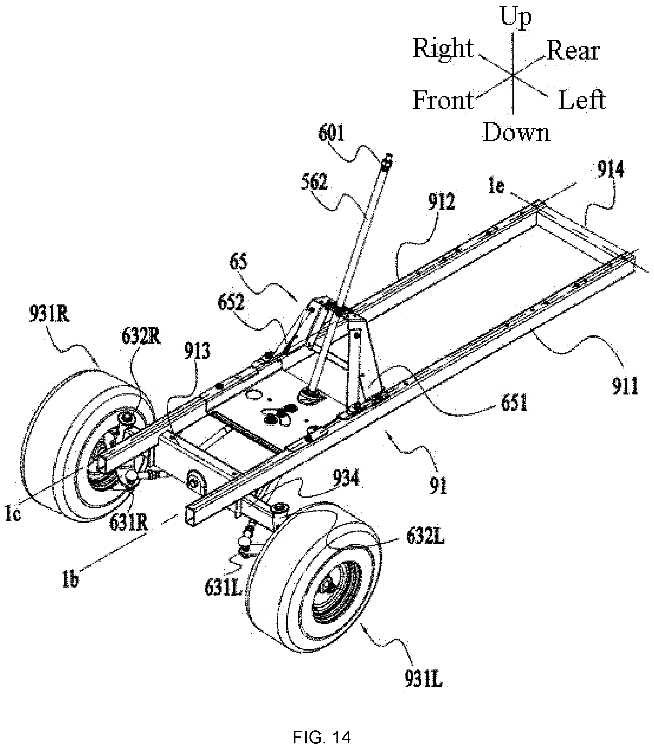

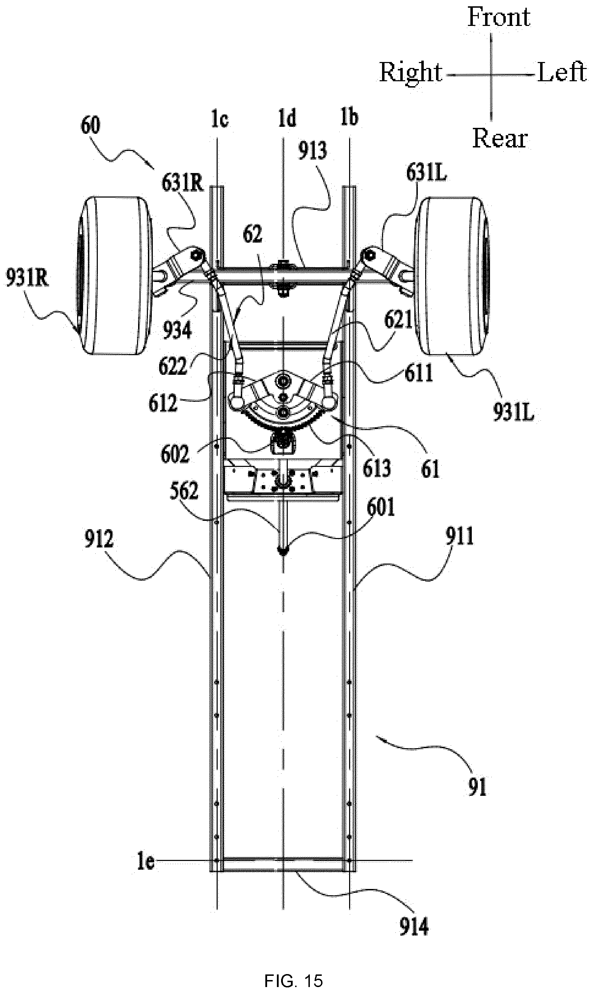

Referring to FIGS. 14 and 15, the frame 91 includes longitudinal beams and cross beams. In some examples, the frame 91 includes two longitudinal beams which are separately a first longitudinal beam 911 and a second longitudinal beam 912. The frame 91 further includes two cross beams which are separately a first cross beam 913 and a second cross beam 914. The first longitudinal beam 911 is disposed on the left side of the seat 92, and the second longitudinal beam 912 is disposed on the right side of the seat 92. The first longitudinal beam 911 extends along a first straight line 1b, and the second longitudinal beam 912 extends along a second straight line 1c, where the first straight line 1b and the second straight line 1c are both parallel to a middle plane 1d of the lawn tractor 100. In this example, the extension direction of the first longitudinal beam 911 is parallel to the extension direction of the second longitudinal beam 912. In this example, a plane passing through the first straight line 1b and the second straight line 1c, that is, a plane 1g where the frame 91 is located, is defined as a reference plane of the lawn tractor 100. When the lawn tractor 100 travels on the ground, that is, on a plane 1f, the reference plane 1g is parallel to the plane 1f. Specifically, since the frame 91 has a certain thickness, the plane 1g where the frame 91 is located in the present invention refers to a plane where the upper edges of the frame 91 are located. The first cross beam 913 is disposed on the front side of the seat 92 and basically located at the front end of the lawn tractor 100. In this manner, the first cross beam 913 serves as a front bumper for protecting the front end of the lawn tractor 100 from being damaged. In an example, a groove is formed in the first cross beam 913 and used for at least partially accommodating the front axle 934. The front axle 934 may also be fixed on the front axle 934 through fixing devices such as bolts. The first beam 913 and the second beam 914 is basically located at the rear end of the lawn tractor 100. In this manner, the second beam 914 serves as a rear bumper for protecting the rear end of the lawn tractor 100 from being damaged. The first cross beam 913 and the second cross beam 914 at least partially extend along a transverse straight line 1e, where the transverse straight line 1e extends along the left and right direction. In this example, the extension direction of the first cross beam 913 is parallel to the extension direction of the second cross beam 914, while the transverse straight line 1e is perpendicular to the first straight line 1b and the second straight line 1c. In this example, the height of the frame 91 is relatively low, thereby lowering the center of gravity of the entire lawn tractor 100 and enabling the lawn tractor 100 to travel smoothly. In an example, the vertical distance H5 between the plane 1g where the frame 91 is located and the plane 1f where the lawn tractor 100 is located is greater than or equal to 35 cm and less than or equal to 37 cm.

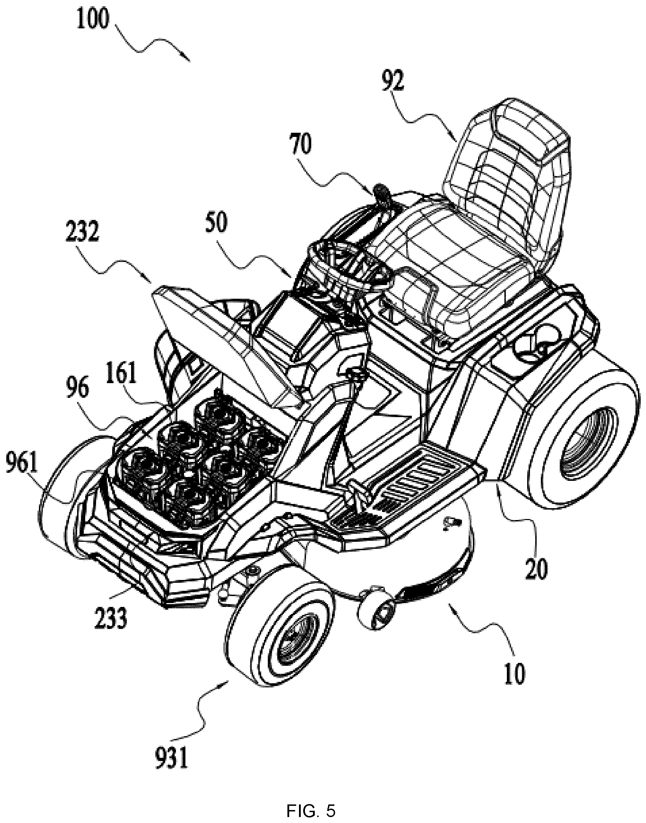

The housing system 20 includes a left cover 21, a right cover 22, and a front cover 23. The front cover 23 is disposed on the front part of the lawn tractor 100 and is the front face of the lawn tractor 100. The front cover 23 covers and forms a front accommodation cavity 231. In an example, as shown in FIG. 5, the front cover 23 includes an upper cover 232 and an enclosure 233 that are separately formed. After the upper cover 232 and the enclosure 233 are assembled on top of the frame 91, the upper cover 232 and the enclosure 233 together form the front accommodation cavity 231. In another example, the front cover 23 is an integrally formed semi-closed structure, and the semi-closed structure assembled on top of the frame 91 forms the front accommodation cavity 231. For example, the front cover 23 is a metal part so that on the one hand, the heat dissipation of the power supply assembly 96 can be facilitated and on the other hand, the strength of a front housing can be increased. Of course, the front cover 23 may be made of plastic material so as to save costs. The specific structure and material of the front cover 23 are not limited in the present invention. The left cover 21 is disposed on the left side of the seat 92, and the right cover 22 is disposed on the right side of the seat 92. In an example, the left cover 21 at least partially covers the left second traveling wheel 932L, and the right cover 22 at least partially covers the right second traveling wheel 932R. The left cover 21 and the right cover 22 may be two separately formed components, or the left cover 21 and the right cover 22 may be one integrally formed component, that is, the left cover 21 and the right cover 22 are connected into one body to form a cover, where this cover at least partially covers the second traveling assembly 932 as a whole. The specific structures and materials of the left cover 21 and the right cover 22 are not limited in the present invention.

In an example, the illumination system 40 includes a front illumination assembly 42, a left illumination assembly 43, and a right illumination assembly 44. In an example, the illumination system 40 further includes a rear illumination assembly. The left illumination assembly 43 is disposed on the left side of the seat 92, the right illumination assembly 44 is disposed on the right side of the seat 92, and the rear illumination assembly is disposed on the rear side of the seat 92. Specifically, the front illumination assembly 42 is mounted on the front cover 23 and includes a front light 421; the left illumination assembly 43 is mounted on the left cover 21 and includes a left light; and the right illumination assembly 44 is mounted on the right cover 22 and includes a right light. In this manner, the front illumination assembly 42 can illuminate the region in front of the lawn tractor 100. The left illumination assembly 43 and the right illumination assembly 44 may be used as position lights of the lawn tractor 100 so that it is convenient for other people around to notice the outline of the lawn tractor 100.

The power supply assembly 96 is used for supplying electric power to the cutting assembly 10, the traveling assembly 93, the illumination system 40, and the like, where the first motors 13, the second motor 933, and the illumination system 40, as electrical devices included in the lawn tractor 100, can convert the electrical energy into other forms of power. As shown in FIGS. 5 to 8, the power supply assembly 96 includes at least one battery pack for storing the electrical energy. For example, the power supply assembly 96 includes at least two battery packs for storing the electrical energy. The power supply assembly 96 is disposed on the front part of the lawn tractor 100 and is covered by the front cover 23. The power supply assembly 96 includes a battery holder housing 961. The battery holder housing 961 includes a first battery holder 162 for mounting a first battery pack 161. The power supply assembly 96 may include the first battery holder 162, and multiple first battery holders 162 may be provided. In an example, the power supply assembly 96 includes six first battery holders 162 and can accommodate six first battery packs 161. Compared with the fuel engine and the fuel tank, the six first battery packs 161 are relatively light in weight. Therefore, the load of the first traveling assembly 931 located on the front part is lighter than the load of the second traveling assembly 932 located on the rear part so that the weight of the lawn tractor 100 shifts backward, thereby reducing the steering force required when the lawn tractor 100 turns and making the operation of the user easier. At the same time, the second traveling assembly located on the rear part applies a relatively large positive pressure to the ground, thereby further increasing the grip of the second traveling assembly of the lawn tractor 100 and making it easier for the lawn tractor 100 to climb. In an example, the load ratio of the first traveling assembly 931 and the second traveling assembly 932 is less than or equal to 1.2. In an example, the load ratio of the first traveling assembly 931 and the second traveling assembly 932 is less than or equal to 1. In an example, the load ratio of the first traveling assembly 931 and the second traveling assembly 932 is less than or equal to 0.8. The center of gravity G of the lawn tractor 100 is located in front of a line between the center point of the left second traveling wheel 932L and the center point of the right second traveling wheel 932R in the front and rear direction.

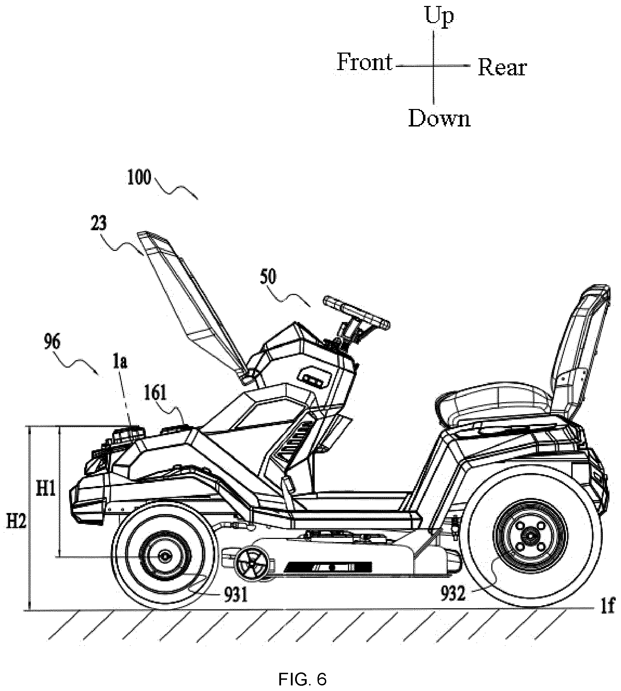

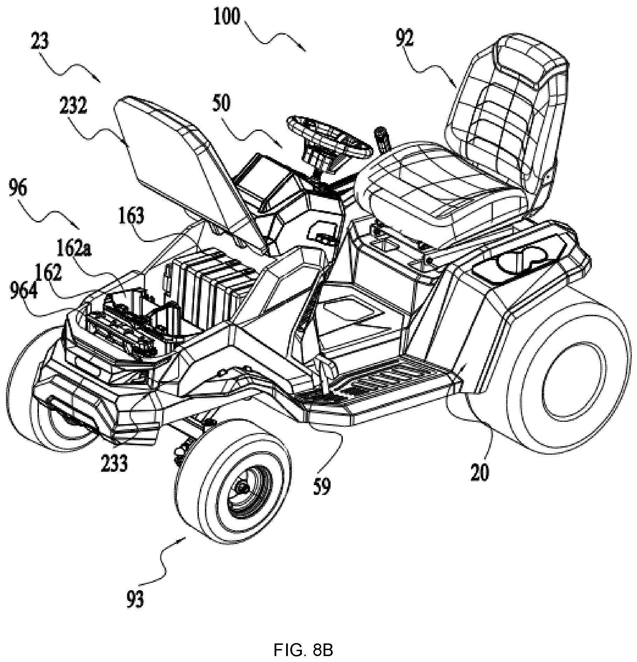

Referring to FIGS. 6 and 8B, each first battery pack 161 may be mounted to each first battery holder 162 correspondingly. A first groove 162a may be formed in the first battery holder 162, and the first battery pack 161 can be detachably inserted into the first groove 162a along the extension direction 1a of the first groove 162a and pulled out of the first groove 162a along the extension direction 1a of the first groove 162a. In an example, the upper cover 232 of the front cover 23 has an open state and a closed state. When the upper cover 232 is in the open state, the first groove 162a is open. At this time, the user may insert the first battery pack 161 into the first groove 162a. When the upper cover 232 is in the closed state, the first groove 162a is closed so that the first battery pack 161 located in the battery holder housing 961 can be protected to a certain extent.

It is to be understood that the six first battery holders 162 may be formed by a single battery holder with a relatively large dimension. That is to say, the power supply assembly 96 includes only one battery holder, and multiple first battery packs 161 are all mounted in the battery holder. Alternatively, the power supply assembly 96 may include only one first battery holder 162, and correspondingly, the power supply assembly 96 may include only one first battery pack 161. That is to say, the number of the first battery holders 162 and the number of the first battery packs 161 are not specifically limited, and the correspondence between the first battery holders 162 and the first battery packs 161 is not limited to a one-to-one correspondence. The multiple first battery packs 161 are arranged in a regular shape, for example, symmetrically distributed about the middle plane 1d of the lawn tractor 100. The first battery pack 161 has a height direction along the extension direction 1a of the first groove 162a into which the first battery pack 161 is inserted and further has a length direction and a width direction perpendicular to the height direction. The dimension of the first battery pack 161 in the length direction is greater than the dimension of the first battery pack 161 in the width direction. In this example, when the first battery pack 161 is inserted into the first groove 162a, the length direction of the first battery pack 161 extends along the left and right direction of the lawn tractor 100. In this manner, when the user needs to mount or remove the first battery pack 161, the wrist of the user does not need to be twisted, thereby improving the comfort of the operation.

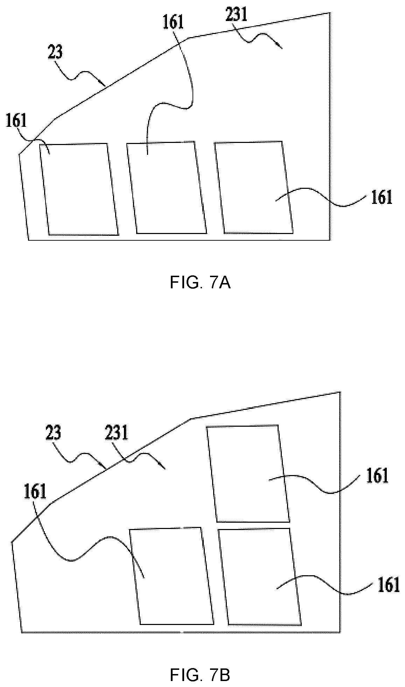

The case where the power supply assembly 96 in this example includes six first battery packs 161 is used as an example. According to the side view of FIG. 7A, the six first battery packs 161 are arranged in three rows along the front and rear direction, and each row includes two first battery packs 161 arranged along the left and right direction. The length of the first battery pack 161 along the left and right direction is greater than the width of the first battery pack 161 along the front and rear direction. In this manner, two first battery packs 161 are arranged in the left and right direction, three first battery packs 161 are arranged in the front and rear direction, and the orientation of a single first battery pack 161 is set such that the length of the first battery pack 161 along the left and right direction is greater than the length of the first battery pack 161 along the front and rear direction. In this manner, the increase of the dimension of the entire lawn tractor 100 in the front and rear direction caused by too large a length of the six battery packs 161 in the front and rear direction can be avoided, and the ineffective use of the space occupied by the lawn tractor 100 in the left and right direction caused by too small a dimension of the six first battery packs 161 in the left and right direction can be avoided so that the arrangement of the power supply assembly 96 is more reasonable and the arrangement space is saved. When the first battery pack 161 is placed along the direction 1a, the vertical height of the highest point of the first battery pack 161 is much less than the height of the engine. Therefore, compared with a traditional fuel-based lawn tractor, the vertical height of the front part of the front cover 23 of the lawn tractor 100 of the present invention is relatively low, and when the user rides on the lawn tractor 100, the front blind spot is relatively small. Moreover, the center of gravity G of the lawn tractor 100 is lowered. The center of gravity G of the lawn tractor 100 is lower than the seat cushion 921 in the up and down direction.

In another example, the six first battery packs 161 are arranged in a stepped manner along the front and rear direction. According to the side view of FIG. 7B, the six first battery packs 161 are arranged in two rows. The front row includes two first battery packs 161 arranged along the left and right direction, and the rear row includes four stacked first battery packs 161. More specifically, the rear row includes an upper layer and a lower layer, the lower layer includes two first battery packs 161 arranged along the left and right direction, and the upper layer includes two first battery packs 161 arranged along the left and right direction. This arrangement further shortens the length of the six first battery packs 161 in the front and rear direction. At the same time, since the front row still has only one layer of two first battery packs 161 arranged in the left and right direction, the height of the front part of the power supply assembly 96 is relatively low. Therefore, the vertical height of the front part of the front cover is relatively low, and when the user rides on the lawn tractor, the front blind spot is relatively small. On this basis, since only two rows of first battery packs 161 exist in the front and rear direction, the first battery packs 161 may be laid down as shown in FIG. 7C, thereby further reducing the height of the power supply assembly 96. As shown in FIG. 6, the height difference H1 between the highest point of the battery pack farthest from the seat 92 among the first battery packs 161 and the center point of the first traveling wheel is less than or equal to 45 cm. In an example, the height difference H1 between the highest point of the battery pack farthest from the seat 92 among the first battery packs 161 and the center point of the first traveling wheel is less than or equal to 44 cm. Moreover, since the frame of the lawn tractor 100 is relatively low, the vertical distance between the first battery packs 161 and the plane where the lawn tractor 100 is located is relatively small. In an example, the vertical distance H2 between the highest point of the battery pack farthest from the seat 92 among the first battery packs 161 and the plane 1f where the lawn tractor 100 is located is less than or equal to 63 cm. In an example, the vertical distance H2 between the highest point of the battery pack farthest from the seat 92 among the first battery packs 161 and the plane 1f where the lawn tractor 100 is located is less than or equal to 62 cm.

In addition to including only the first battery packs 161, the power supply assembly 96 may be configured to be a combination of a built-in cell module 163 and an external battery pack, where the external battery pack may be the first battery pack 161 or another detachable battery pack. As shown in FIGS. 8A to 8C, in an example, the power supply assembly 96 includes two first battery packs 161 and a row of built-in cell modules 163. In another example, the power supply assembly 96 includes two first battery packs 161 and two rows of built-in cell modules 163. The built-in cell module 163 has less cost and a more compact structure than the detachable external battery pack, thereby providing more adequate power storage for the lawn tractor 100 while saving space and cost. In addition, a certain number of detachable external battery packs are provided so that the flexibility of the power supply assembly 96 is ensured. For example, the user may take only the first battery packs 161 away for charging without the need to drive the entire lawn tractor 100 to a charging station. When the user is inconvenient or has no time to charge the built-in cell modules 163 of the lawn tractor 100, the first battery packs 161 may be directly inserted so that a short-time mowing requirement can be satisfied. The first battery packs 161 are also be adapted to other power tools and supply power to other power tools. In an example, the first battery pack 161 may be mounted to the first battery holder 162, and the first battery holder 162 is disposed in front of the built-in cell module 163. In this manner, when the user mounts or removes the first battery pack 161, the user does not need to operate across the built-in cell module 163, which is convenient for the user to mount or remove the first battery pack 161.

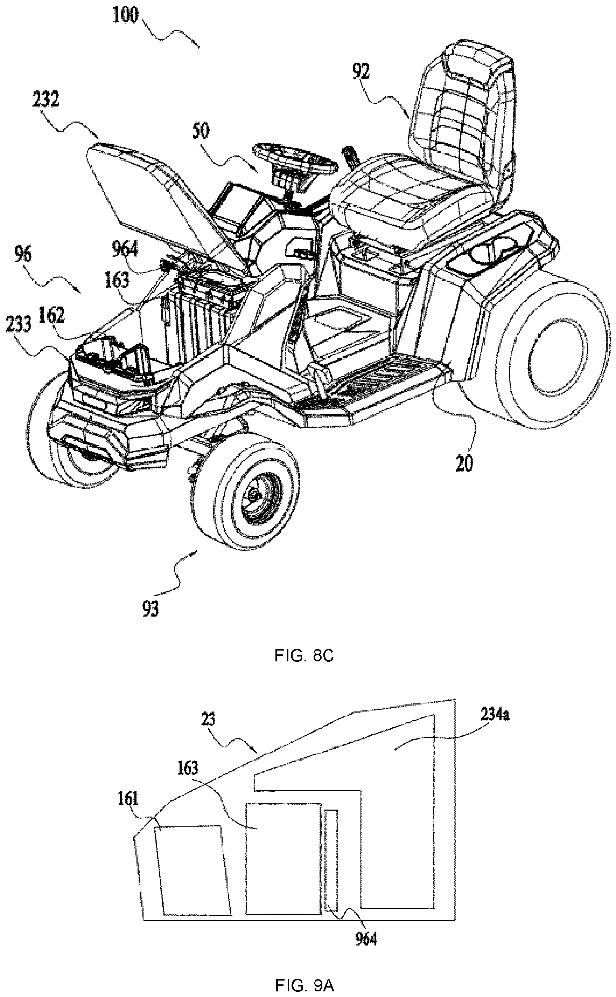

The power supply assembly 96 further includes a battery management system (BMS). For example, the BMS is implemented through a battery management circuit board 964. Since the external first battery pack 161 is generally integrated with the BMS, the battery management circuit board 964 in this example is mainly used for managing the charging process of the built-in cell module 163 and the coordinated discharge of the first battery pack 161 and the built-in cell module 163. As shown in FIG. 8A, the battery management circuit board 964 is placed behind the built-in cell module 163 and is close to the built-in cell module 163 so that the cable path is relatively short. However, the battery management circuit board 964 is disposed behind the built-in cell module 163, which is not conducive to the heat dissipation of the battery management circuit board 964. As shown in FIG. 8B, the battery management circuit board 964 is placed in front of the first battery pack 161, that is to say, the battery management circuit board 964 is located at the front of the accommodation cavity covered by the front cover 23. At the same time, a vent is disposed on the front part of the front cover so that when the lawn tractor 100 travels forward, the battery management circuit board 964 is blown against the wind, and the heat dissipation effect is good; however, at this time, the battery management circuit board 964 is relatively far away from the built-in cell module 163, resulting in a relatively long cable path. As shown in FIG. 8C, the battery management circuit board 964 is disposed above the built-in cell module 163, that is to say, the battery management circuit board 964 is located in the upper part of the accommodation cavity covered by the front cover 23. At the same time, a vent is disposed at the top of the front cover so that when the lawn tractor 100 travels forward, the battery management circuit board 964 is blown against the wind, and the heat dissipation effect is good; moreover, the battery management circuit board 964 is relatively close to the built-in cell module 163 so that the cable path is relatively short; however, the storage space above the built-in cell module 163 is affected to a certain extent.

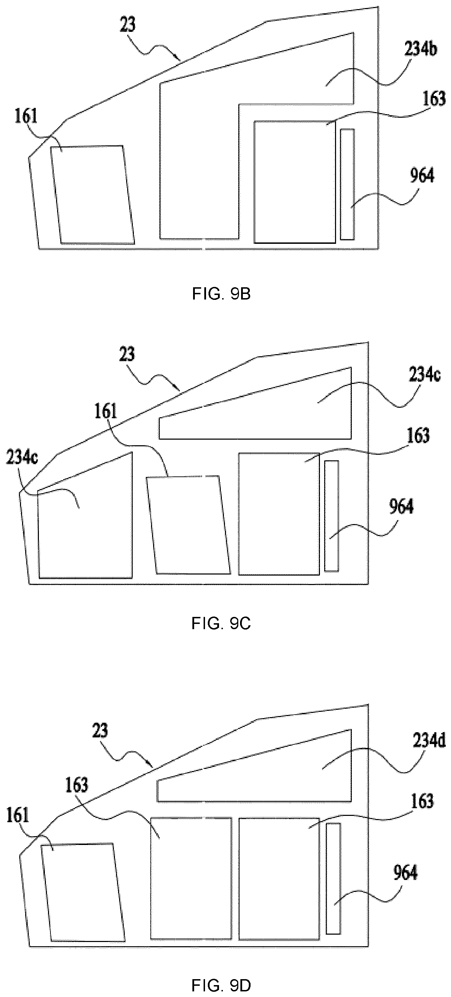

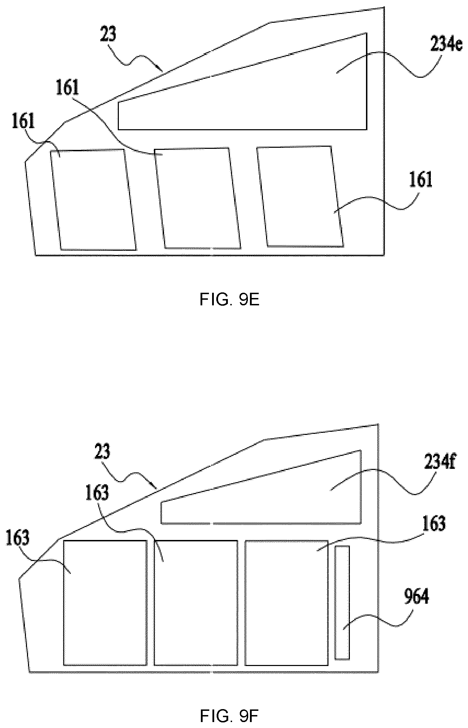

In addition to accommodating the power supply assembly 96, the front accommodation cavity 231 formed by the front cover 23 has a surplus storage space 234 to provide a certain storage function. The front cover 23 includes the upper cover 232 having an open position and a closed position. When the upper cover 232 is at the open position, the storage space is accessible to the user. The storage space may be used for storing small tools, gloves, sun protection hats, and even clothes according to the requirements of the user, making it convenient for the user and improving the comfort of the mowing work. As shown in FIG. 9A, the power supply assembly 96 includes a row of first battery packs 161 and a row of built-in cell modules 163. The first battery packs 161 are located in front of the built-in cell modules 163, the battery management circuit board 964 is disposed behind the built-in cell modules 163, and the first battery packs 161 and the built-in cell modules 163 are disposed in the front part and the middle part of the front accommodation cavity 231. At this time, a storage space 234a is disposed behind and above the built-in cell modules 163. As shown in FIG. 9B, the power supply assembly 96 includes a row of first battery packs 161 and a row of built-in cell modules 163. The first battery packs 161 are located in front of the built-in cell modules 163, and a gap exists between the first battery packs 161 and the built-in cell modules 163. That is to say, the first battery packs 161 are disposed in the front part of the front accommodation cavity 231, and the built-in cell modules 163 are disposed in the rear part of the front accommodation cavity 231. At this time, a storage space 234b is disposed above the built-in cell modules 163 and in the gap between the first battery packs 161 and the built-in cell modules 163. As shown in FIG. 9C, the power supply assembly 96 includes a row of first battery packs 161 and a row of built-in cell modules 163. The first battery packs 161 are located in front of the built-in cell modules 163, and the first battery packs 161 and the built-in cell modules 163 are disposed in the middle part and the rear part of the front accommodation cavity 231. At this time, a storage space 234c is disposed in front of the first battery packs 161 and above the built-in cell modules 163. Optionally, the storage space 234c may be divided into two parts, or in other words, two independent storage spaces exist. As shown in FIG. 9D, the power supply assembly 96 includes a row of first battery packs 161 and two rows of built-in cell modules 163. The first battery packs 161 are located in front of the built-in cell modules 163, and the first battery packs 161 and the built-in cell modules 163 are disposed in the front part, the middle part, and the rear part of the front accommodation cavity 231. At this time, a storage space 234d is disposed above the two rows of built-in cell modules 163. Of course, the power supply assembly 96 is not limited to a combination of the first battery pack 161 and the built-in cell module 163. The power supply assembly 96 may have only the first battery pack 161 or only the built-in cell module 163. As shown in FIG. 9E, the power supply assembly 96 includes three rows of first battery packs 161. The three rows of first battery packs 161 are separately disposed in the front part, the middle part, and the rear part of the front accommodation cavity 231. At this time, a storage space 234e is disposed above the first battery packs 161. As shown in FIG. 9F, the power supply assembly 96 includes three rows of built-in cell modules 163. The built-in cell modules 163 are separately disposed in the front part, the middle part, and the rear part of the front accommodation cavity 231, and the battery management circuit board 964 is disposed behind the built-in cell modules 163. At this time, a storage space 234f is disposed above the built-in cell modules 163. To prevent the stored items from interfering with the power supply assembly 96, for example, with the first battery packs 161, the built-in cell modules 163, or the battery management circuit board 964, the storage space 234 is divided by a partition, where the partition may be made of plastic, and the shape of the partition is determined according to the specific shape of the storage space 234, which is not described in detail here. The upper cover 232 of the front cover 23 may be movably and rotatably connected to the front cover 23 through structures such as slide rails or hinges, which is not described in detail here. The upper cover 232 of the front cover 23 may be provided according to the configuration of the storage space. The specific shape and size of the upper cover 232 are not limited in the present invention.

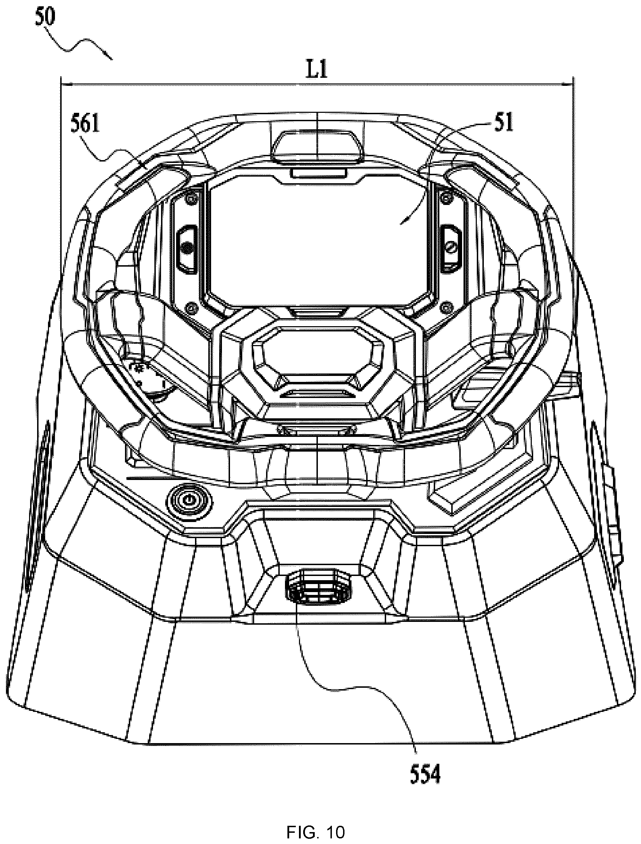

Referring to FIGS. 10 to 14, the operating assembly 50 of the lawn tractor 100 includes a control panel 52, a steering wheel assembly 56, and a pedal assembly 59. In an example, the pedal assembly 59 includes an accelerator pedal and a brake pedal. The control panel 52 and the steering wheel assembly 56 are disposed between the seat 92 and the front cover 23. In this example, the steering wheel assembly 56 includes a steering wheel 561 and a support rod 562. The steering wheel 561 is operable by the user to control the traveling direction of the lawn tractor 100. The support rod 562 connects the steering wheel 561 to a steering assembly 60. The support rod 562 transmits the torque of the user turning the steering wheel 561 to the steering assembly 60 to control the first traveling assembly to change the direction. The control panel 52 is connected to the front cover 23. The control panel 52 includes a display screen 51 and multiple operating members 55 so that the user can conveniently see the display state on the display screen 51 while operating the multiple operating members 55, which is more in line with the ergonomic design. The display screen 51 is used for displaying the state information of the lawn tractor 100. The multiple operating members 55 are operable by the user to control the traveling assembly and the cutting assembly. The multiple operating members 55 may include switches, buttons, gears, and the like. The multiple operating members 55 may be configured in different shapes and sizes so that the user can operate different operating members 55 without looking at the operating members 55.

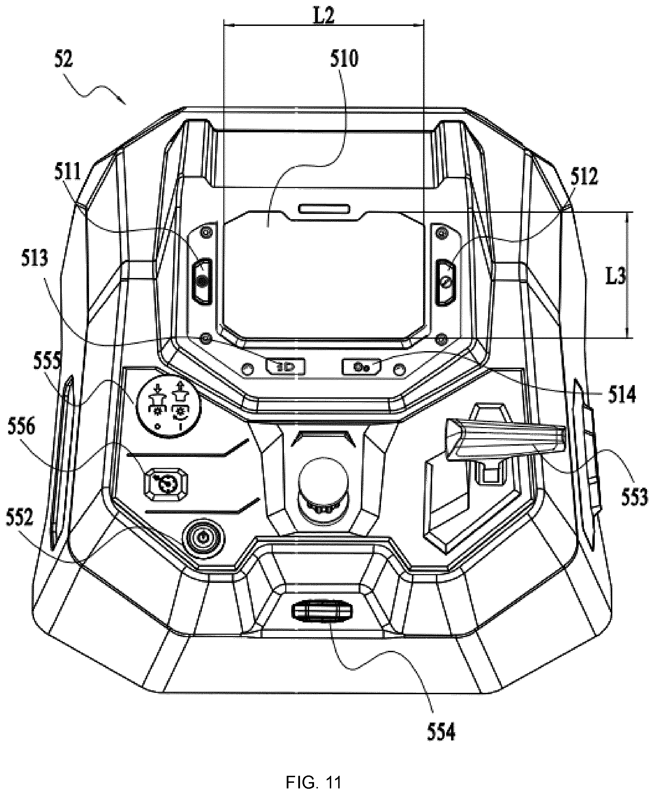

As shown in FIG. 11, the multiple operating members 55 include a keyhole 554. When a key is inserted into the keyhole 554, the lawn tractor 100 can be started. When no key is inserted into the keyhole 554, the power supply of the lawn tractor 100 is cut off and the lawn tractor 100 cannot be started. In an example, when the key is inserted into the keyhole 554, a switch located in the keyhole 554 can be activated. That is to say, when the key is inserted into the keyhole 554, the switch located in the keyhole 554 can be activated without turning the key, thereby facilitating the operation of the user. In an example, further, a safety cover is connected to the keyhole 554. The safety cover is movably connected to the keyhole 554. When a key 551 is not inserted into the keyhole 554, the safety cover closes the keyhole 554 to prevent water vapor and dust from entering the keyhole 554. When the key 551 is inserted into the keyhole 554, the safety cover is pressed down to open the keyhole 554. The keyhole 554 is formed in the control panel 52, and the safety cover may be rotatably connected to the control panel 52 through a torsion spring. The multiple operating members 55 further include a start key 552. When the start key 552 is triggered, the lawn tractor 100 enters a standby state. At this time, the user may operate other operating members 55 to make the lawn tractor 100 enter a traveling state or a mowing state. The multiple operating members 55 further include a first push rod 553 having a first position and a second position, where when the first push rod 553 is set to the first position, the lawn tractor 100 is in a forward state; and when the first push rod is set to the second position, the lawn tractor 100 is in a backward state. When the lawn tractor 100 is in the forward state, the user may control the forward speed of the lawn tractor 100 through the pedal assembly 59. When the lawn tractor 100 is in the backward state, the user may control the backward speed of the lawn tractor 100 through the pedal assembly 59. The multiple operating members 55 further include a PTO switch 555 having a first position and a second position, where when the PTO switch 555 is set to the first position, the mowing elements rotate; and when the PTO switch 555 is set to the second position, the mowing elements stop. The PTO switch 555 is at the first position when lifted, and the PTO switch 555 is at the second position when pressed. When the user discovers an emergency, the user only needs to press the PTO switch 555 to make the mowing elements stop urgently, making the operation quick and convenient. The multiple operating members 55 further include a cruise control button 556. When the cruise control button 556 is triggered, the lawn tractor 100 receives a cruise control command from the user and determines whether to enter a cruise control mode depending on the current state. In an example, from the perspective of the user, the multiple operating members 55 are distributed below the display screen 51.

The display screen 51 includes a display interface 510 for displaying the working state of the lawn tractor 100. The display interface 510 is understood to be a display region directly observed by the user. Different state information may be displayed on the display interface 510 as needed. The display interface 510 may display the traveling speed of the traveling assembly 93, the rotational speed of the mowing elements 12, the energy efficiency state of the lawn tractor 100, the remaining power information of the power supply assembly 96, warning information, fault information, and the remaining operation time of the power supply assembly 96. The display screen 51 further includes multiple buttons arranged around the display interface 510, for example, a first button 511 and a second button 512 used for the user to operate to adjust the traveling speed and the rotational speed of the blades of the lawn tractor 100, respectively. In an example, the first button 511 is operable by the user to change the maximum traveling speed of the lawn tractor 100. When the user steps on the pedal assembly 59 to the maximum position, the lawn tractor 100 travels at the maximum traveling speed set by the first button 511. The second button 512 is operable by the user to change the rotational speed of the mowing elements of the lawn tractor 100. The first button 511 and the second button 512 may be separately disposed on the left and right sides of the display interface 510. Further, a third button 513 is disposed around the display interface 510 and used for the user to operate to control the lighting function of the lawn tractor 100. For example, when the user operates the third button 513 using a first operation manner, the illumination system 40 turns on part of the lights; and when the user operates the third button 513 using a second operation manner, the illumination system 40 turns on all the lights. In this example, further, a fourth button 514 is disposed around the display interface 510. The fourth button 514 is operable by the user so that the lawn tractor 100 enters different driving modes, such as a sport mode, a normal mode, and a control mode. In this manner, the user may select different driving modes according to personal preferences, thereby improving the user experience of the lawn tractor 100. At this time, information about different driving modes of the lawn tractor 100 may be displayed on the display interface 510. Further, the fourth button 514 is operable by the user in different operation modes so as to perform other configurations of the lawn tractor 100. For example, long pressing the fourth button 514 switches the driving modes and short pressing the fourth button 514 enters a settings menu. The third button 513 and the fourth button 514 may be disposed on the lower side of the display interface 510.

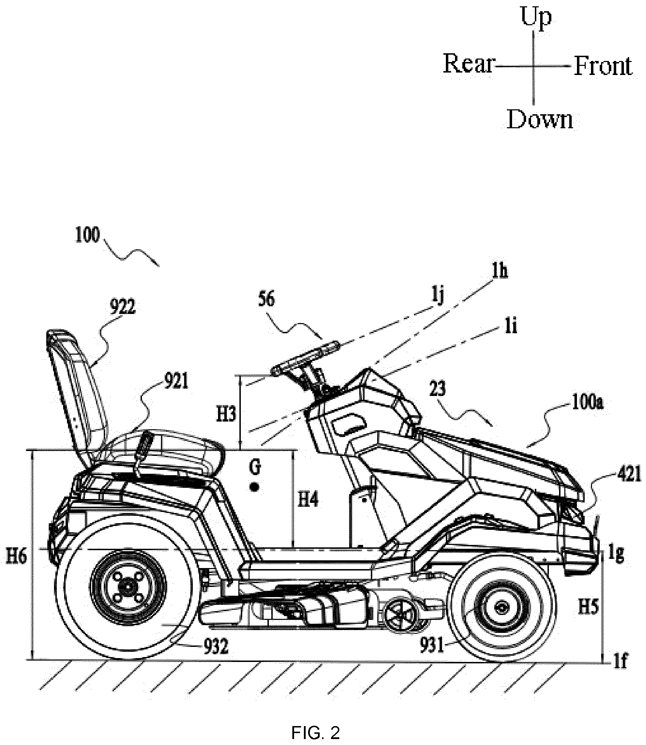

As shown in FIG. 2, the display screen 51 extends on an inclined plane 1h that obliquely intersects with the plane 1g where the frame 91 is located, and the display interface 510 and the display screen 51 extend on the same plane. The included angle formed by the oblique intersection of the inclined plane 1h on which the display screen 51 extends and the plane 1g where the frame 91 is located is greater than or equal to 20 degrees and less than or equal to 45 degrees; or the included angle formed by the oblique intersection of the inclined plane 1h on which the display screen 51 extends and the plane 1g where the frame 91 is located is greater than or equal to 25 degrees and less than or equal to 40 degrees. In this manner, the display screen 51 extends upward obliquely so that it is convenient for the user to observe the state information on the display screen 51 when the user sits on the seat 92, and the user does not need to lower the head to observe the state information. In this example, an inclined plane 1j on which the steering wheel 561 extends is basically parallel to an inclined plane 1i on which the control panel 52 extends. The included angle formed by the intersection of the inclined plane 1h on which the display screen 51 extends and the plane 1g where the frame 91 is located is greater than the included angle formed by the intersection of the inclined plane 1i on which the control panel 52 extends and the plane 1g where the frame 91 is located. Similarly, the included angle formed by the intersection of the inclined plane 1h on which the display screen 51 extends and the plane 1g where the frame 91 is located is greater than the included angle formed by the intersection of the inclined plane 1j on which the steering wheel 561 extends and the plane 1g where the frame 91 is located. The included angle formed by the oblique intersection of the inclined plane 1i on which the display screen 52 extends and the plane 1g where the frame 91 is located is greater than or equal to 5 degrees and less than or equal to 35 degrees; or the included angle formed by the oblique intersection of the inclined plane 1i on which the display screen 52 extends and the plane 1g where the frame 91 is located is greater than or equal to 10 degrees and less than or equal to 30 degrees. Similarly, the included angle formed by the oblique intersection of the inclined plane 1j on which the steering wheel 561 extends and the plane 1g where the frame 91 is located is greater than or equal to 5 degrees and less than or equal to 35 degrees; or the included angle formed by the oblique intersection of the inclined plane 1j on which the steering wheel 561 extends and the plane 1g where the frame 91 is located is greater than or equal to 10 degrees and less than or equal to 30 degrees. At the same time, to be convenient for the user to hold the steering wheel 561 at a comfortable angle when the user sits on the seat 92, the height difference between the lowest point of the steering wheel 561 and the seat cushion 921 should not be too small. In an example, the height difference H3 between the lowest point of the steering wheel 561 and the seat cushion 921 is greater than or equal to 24 cm. In an example, the height difference H3 between the lowest point of the steering wheel 561 and the seat cushion 921 is greater than or equal to 26 cm.

It is convenient for the user to view the state information on the display interface 510, and the size of the display interface 510 is understood to be the size of a display region that is exposed and can be observed by the user. As shown in FIG. 11, in this example, the display interface 510 is basically rectangular. The dimension of the display interface 510 in the length direction, that is, the length L2, is greater than or equal to 10 cm and less than or equal to 15 cm, and the dimension of the display interface 510 in the width direction, that is, the width L3, is greater than or equal to 6 cm and less than or equal to 10 cm. In this manner, the dimensions of the display interface 510 are large enough for the display interface 510 to display more state information that the user wants to know. The area of the display interface 510 is greater than or equal to 60 cm² and less than or equal to 150 cm². The positional relationship between the display interface 510 and the steering wheel assembly 56 is shown in FIG. 11. The support rod 562 passes through the control panel 52. More specifically, the support rod 562 passes through the control panel 52 from the lower part of the display interface 510. When the user sits on the seat 92 and looks at the display interface 510, the line of sight of the user passes through the steering wheel 561. Therefore, the steering wheel 561 is provided with a large-area opening so that it is convenient for the user to completely observe the display interface 510 from the opening. For example, the support rod 562 passes through the bottom of the display interface 510, the support rod 562 supports the steering wheel 561 at the center of the steering wheel 561, and the large-area opening is disposed in the upper half of the steering wheel 561 so that the display interface 510 faces the opening. In addition, taking into account the distance between the inclined plane 1h on which the display screen 51 extends and the inclined plane 1j on which the steering wheel extends and the aspect ratio of the display interface 510, when the length L2 of the display interface 510 is greater than or equal to one quarter of the diameter L1 of the steering wheel 561 and less than or equal to two thirds of the diameter L1 of the steering wheel 561, the user can easily observe the entire display interface 510 from the opening of the steering wheel 561, and the dimension of the display interface 510 is large enough. For a non-circular steering wheel, the diameter L1 of the steering wheel 561 refers to the maximum length of the steering wheel 561 in the left and right direction of the lawn tractor 100. In an example, the length of the display interface 510 is substantially equal to half of the diameter L1 of the steering wheel 561. In an example, the ratio of the circumference of the display interface 510 to the circumference of the steering wheel 561 is greater than or equal to one quarter and less than or equal to one half. In an example, the ratio of the circumference of the display interface 510 to the circumference of the steering wheel 561 is greater than or equal to one third and less than or equal to one half.

The lawn tractor 100 further includes a signal circuit board 951. The signal circuit board 951 is used for receiving the state information of the lawn tractor 100 and transmitting the state information to a display circuit board 953 of the display screen 51. The signal circuit board 951 is also responsible for receiving switching signals of the operating members and buttons on the control panel 52 and transmitting the switching signals to a main control circuit board 952. The signal circuit board 951 is mounted on the back of the control panel 52. That is to say, the display screen and the multiple operating members are disposed on the front of the control panel 52. In addition, the support rod 562 of the steering wheel passes through the control panel 52, the steering wheel protrudes from the front of the control panel 52, the steering wheel is parallel to the display screen, and the signal circuit board 951 is disposed on the back of the control panel 52. Therefore, the signal circuit board 951 is disposed on the upper part of the whole machine of the lawn tractor 100 and is close to the display screen 51 and the operating members 55 so that the wires are saved and the wiring is simple. This part is convenient for maintenance. The signal circuit board 951 can be disassembled for maintenance and replacement by turning over the control panel 52. In addition, since the signal circuit board 951 is located on the upper part of the whole machine, this part will not be immersed in water during normal use, thereby avoiding the failure of the signal circuit board 951 due to water intrusion. In addition, the signal circuit board 951 is separated from the high-current control circuit board 952, which is conducive to avoiding the interference between strong and weak electrical signals.

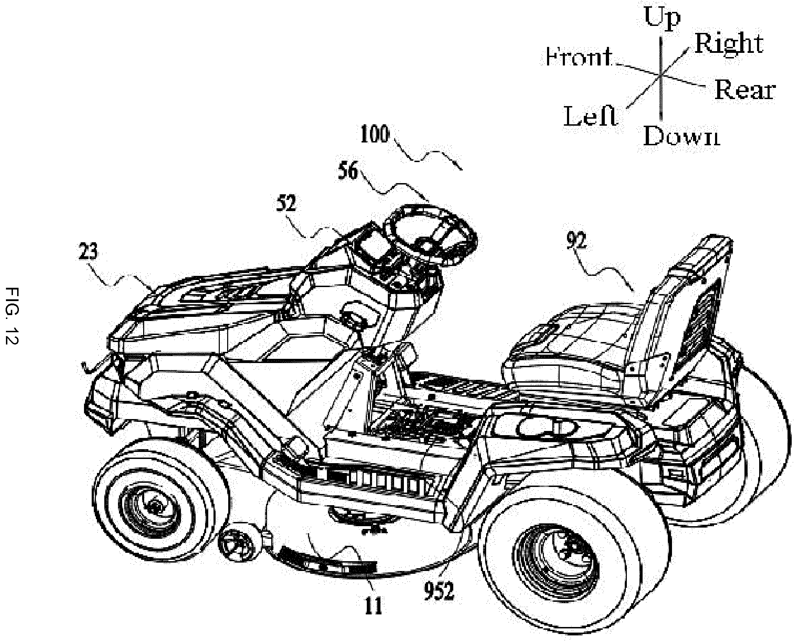

The lawn tractor 100 further includes the control circuit board 952. The control circuit board 952 is used for controlling the cutting assembly 10 and the traveling assembly 93. For the cutting assembly 10, the control circuit board 952 can control the operation of the first motors 13. For the traveling assembly 93, the control circuit board 952 can control the operation of the second motor 933. In this example, as shown in FIG. 12, the control circuit board 952 is mounted to the frame 91. In the front and rear direction, the control circuit board 952 is disposed between the seat 92 and the power supply assembly 96, and further, the control circuit board 952 is disposed between the seat 92 and the support rod 562. In an example, the control circuit board 952 is disposed below a maintenance cover 25 of the lawn tractor 100, which is where the feet of the user step when the user sits on the seat 92. In the up and down direction, the control circuit board 952 is disposed between the maintenance cover 25 and the cutting deck 11. In the left and right direction, the control circuit board 952 is disposed between the two longitudinal beams, that is, disposed between the first longitudinal beam 911 and the second longitudinal beam 912. Such a layout can save space, facilitate wiring, and make the structure of the whole machine more compact, which is conducive to the heat dissipation and later maintenance of the control circuit board 952.

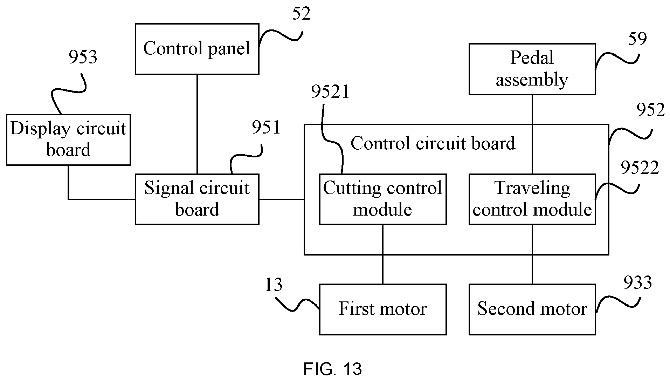

The pedal assembly 59 is located in front of the control circuit board 952, the second motor 933 is located behind the control circuit board 952, and the first motors 13 are located below the control circuit board 952. Since the main control circuit board 952 is relatively close to the pedal assembly 59, the second motor 933, and the first motors 13, the wires are saved and the wiring is simplified. As shown in FIG. 13, the main control circuit board 952 includes a cutting control module 9521 and a traveling control module 9522. The cutting control module 9521 is electrically connected to the first motors 13 through wires. The traveling control module 9522 is electrically connected to the pedal assembly 59 and the second motor 933 through wires. The cutting control module 9521 and the traveling control module 9522 are also electrically connected to the signal circuit board 951 to receive electronic signals sent by the operating members 55 and buttons on the control panel 52. Since the upper and lower sides of the control circuit board 952 connect with the air, when the lawn tractor 100 is traveling, the oncoming wind blows through the upper and lower sides of the control circuit board 952 and takes away the heat of the control circuit board 952. In an example, the main control circuit board 952 may be packaged in a main control box, thereby protecting the circuit elements and achieving waterproof and dustproof effects. When maintenance is required, the control circuit board 952 can be repaired or replaced just by disassembling the pedals and opening the main control box, which is easy to operate. In addition, since the control circuit board 952 is located above the cutting deck 11, this part will not be immersed in water during normal use, thereby avoiding the failure of the control circuit board 952 due to water intrusion. In an example, the center of gravity G of the lawn tractor is located between the control circuit board 952 and the seat 92 in the front and rear direction.

In this example, the steering assembly 60 of the lawn tractor 100 drives the first traveling assembly 931 to turn. That is to say, the steering assembly 60 can turn the left first traveling wheel 931L and the right first traveling wheel 931R. As shown in FIGS. 14 and 15, the steering assembly 60 is mainly disposed behind the first traveling assembly 931. The first traveling assembly 931 is at least partially located in front of the power supply assembly 96 in the front and rear direction of the lawn tractor 100, thereby protecting the power supply assembly 96. Specifically, the left first traveling wheel 931L and the right first traveling wheel 931R are at least partially located in front of the first battery packs 161 in the front and rear direction of the lawn tractor 100. The support rod 562 connects the steering wheel 561 to the steering assembly 60 and transmits the steering force applied by the user to the steering wheel 561 from the steering wheel 561 to the steering assembly 60. A gear 601 is fixedly mounted at an end of the support rod 562 connected to the steering wheel 561. The center of the steering wheel 561 includes a ring gear (not shown) meshing with the gear. When the user turns the steering wheel 561, the ring gear of the steering wheel 561 drives the gear 601 of the support rod 562 to rotate synchronously. Referring to FIG. 15, the steering assembly 60 includes a steering sprocket 61 and steering pull rods 62 linked with the steering sprocket. In this example, the steering sprocket 61 and the steering pull rods 62 are disposed below the frame 91. The steering sprocket 61 may be a sector-shaped sprocket. The sector includes two straight sides and an arc side 613. A row of teeth is formed on the arc side 613 of the sector. The two straight sides include a first straight side 611 and a second straight side 612. The steering pull rods 62 include a first pull rod 621 and a second pull rod 622. The point of intersection of the first straight side 611 and the arc side 613 is connected to the first pull rod 621. The point of intersection of the second straight side 612 and the arc side 613 is connected to the second pull rod 622. In an example, the steering sprocket 61 is separately connected to the first pull rod 621 and the second pull rod 622 through ball shafts. The first pull rod 621 is connected to a steering knuckle 631L of the left first traveling wheel 931L through a ball shaft, and the second pull rod 622 is connected to a steering knuckle 631R of the right first traveling wheel 931R through a ball shaft. The ball shaft not only is linked with the connected components but also allows a certain degree of freedom, making the turning operation smoother. In this example, the steering knuckle 631L of the left first traveling wheel 931L and the steering knuckle 631R of the right first traveling wheel 931R are located below the front axle 934 in the up and down direction. Further, a gear 602 is fixedly mounted at an end of the support rod 562 connected to the steering assembly 60, and the gear 602 rotates synchronously with the support rod 562 and the steering wheel 561. The gear 602 meshes with the row of teeth on the arc side 613 of the steering sprocket 61. When the support rod 562 rotates, the gear 602 drives the steering sprocket 61 to rotate, and when the steering sprocket 61 rotates, the steering sprocket 61 drives the first pull rod 621 and the second pull rod 622. Further, the first pull rod 621 drives the steering knuckle 631L of the left first traveling wheel 931L to rotate, and the second pull rod 622 drives the steering knuckle 631R of the right first traveling wheel 931R to rotate. The steering knuckle is fixedly connected to a kingpin of the first traveling wheel and controls the direction of the kingpin, thereby driving the first traveling assembly 931 to turn. The steering knuckle 631L of the left first traveling wheel 931L is fixedly connected to a left kingpin 632L, and the steering knuckle 631R of the right first traveling wheel 931R is fixedly connected to a right kingpin 632R. For example, when the steering wheel 561 rotates counterclockwise, the support rod 562 rotates counterclockwise, and the gear 602 rotates counterclockwise so that the steering sprocket 61 meshing with the gear 602 rotates clockwise. Therefore, the first pull rod 62 pulls the steering knuckle 631L of the left first traveling wheel 931L outward, and the second pull rod 622 pulls the steering knuckle 631R of the right first traveling wheel 931R inward, causing both the left first traveling wheel 931L and the right first traveling wheel 931R to deflect to the left, thereby driving the lawn tractor 100 to turn to the left.

The lawn tractor 100 has the middle plane 1d extending along the front and rear direction. The steering assembly 60 is symmetrical about the middle plane 1d. Specifically, the first pull rod 621 and the second pull rod 622 are symmetrical parts to each other, and the steering sprocket 61 is symmetrical about the middle plane 1d. Therefore, the maximum steering angle of the left first traveling wheel 931L to the left is equal to the maximum steering angle of the right first traveling wheel 931R to the right, and the maximum steering angle of the left first traveling wheel 931L to the right is equal to the maximum steering angle of the right first traveling wheel 931R to the left. Of course, the maximum steering angle of the left first traveling wheel 931L to the left is greater than the maximum steering angle of the left first traveling wheel 931L to the right, and the maximum steering angle of the right first traveling wheel 931R to the right is greater than the maximum steering angle of the right first traveling wheel 931R to the left. That is to say, the maximum steering angle of the left first traveling wheel 931L is the same as the maximum steering angle of the right first traveling wheel 931R, and the maximum steering angle of the first traveling wheel toward the outside of the lawn tractor 100 is greater than the maximum steering angle of the first traveling wheel toward the inside of the lawn tractor 100. In an example, the maximum steering angle of the first traveling wheel toward the outside of the lawn tractor 100 is greater than or equal to 60°. In an example, the maximum steering angle of the first traveling wheel toward the outside of the lawn tractor 100 is greater than or equal to 65°, that is to say, the maximum steering angle of the left first traveling wheel 931L to the left is greater than or equal to 65°, and the maximum steering angle of the right first traveling wheel 931R to the right is greater than or equal to 65°. In an example, the maximum steering angle of the first traveling assembly 931 toward the inside of the lawn tractor 100 is greater than or equal to 50°. In an example, the maximum steering angle of the first traveling assembly 931 toward the inside of the lawn tractor 100 is greater than or equal to 55°, that is to say, the maximum steering angle of the left first traveling wheel 931L to the right is greater than or equal to 55°, and the maximum steering angle of the right first traveling wheel 931R to the left is greater than or equal to 55°. At this time, the minimum left turning radius of the lawn tractor 100 is equal to the minimum right turning radius of the lawn tractor 100, and the minimum turning radius of the lawn tractor 100 is less than or equal to 90 cm.

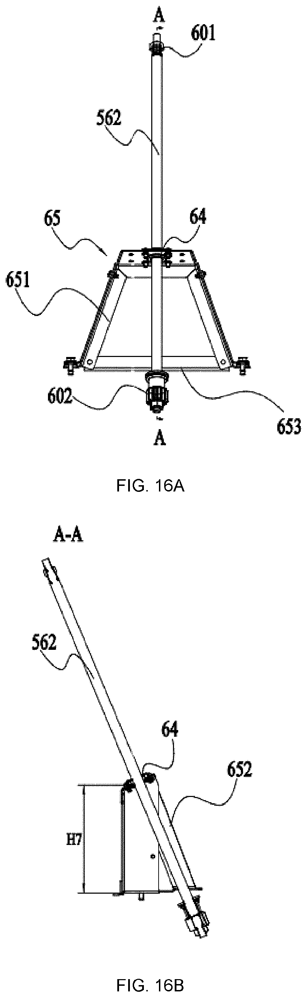

As shown in FIGS. 14, 16A, and 16B, the lawn tractor 100 further includes a support bracket 65 for supporting the support rod 562. The support bracket 65 includes support legs 651, and the support legs 651 are fixed to the frame 91 through common parts such as bolts. The support bracket 65 limits and supports the support rod 562 at the middle part of the support rod 562, thereby improving the rigidity and stability of the support rod 562 and improving the coaxiality of the gear 601 and the gear 602. In an example, the vertical distance H7 between a support point of the support bracket 65 for the support rod 562 and the plane 1g where the frame 91 is located is greater than or equal to 10 cm and less than or equal to 35 cm. In an example, the vertical distance H7 between the support point of the support bracket 65 for the support rod 562 and the plane 1g where the frame 91 is located is greater than or equal to 15 cm and less than or equal to 30 cm. In an example, the vertical distance H7 between the support point of the support bracket 65 for the support rod 562 and the plane 1g where the frame 91 is located is equal to 20 cm. The support rod 562 and the support bracket 65 are rotatably connected through a bearing 64, thereby making the rotation of the support rod 562 smoother and reducing the steering force required for turning. To improve the stiffness of the support bracket 65, auxiliary support legs 652 and a cross beam 653 may further be provided. Two ends of the auxiliary support leg 652 are separately connected to the support leg 651 and the longitudinal beam of the frame 91. The auxiliary support legs 652 are basically parallel to the support rod 562. The cross beam 653 is set up between the two support legs 651 for reinforcement. In this example, due to the two-stage transmission mechanism of gear transmission and connecting rod transmission, a gear ratio of 4 to 6 is achieved. That is to say, the ratio of the angle of rotation of the steering wheel 561 to the angle of rotation of the first traveling wheel toward the outside of the lawn tractor 100 is between 4:1 and 6:1. In an example, the ratio of the angle of rotation of the steering wheel 561 to the angle of rotation of the first traveling wheel toward the outside of the lawn tractor 100 is 4.7. In an example, the ratio of the angle of rotation of the steering wheel 561 to the angle of rotation of the first traveling wheel toward the outside of the lawn tractor 100 is 5.2.

Since the front wheel load of the lawn tractor 100 is relatively small, that is, the load ratio of the first traveling assembly 931 and the second traveling assembly 932 is less than or equal to 1, the steering force required for turning is relatively small so that the user can operate the steering wheel easily for turning. In an example, an additional stage of gear transmission mechanism, similar to a decelerator, may be provided to increase the overall transmission ratio as much as possible, thereby further reducing the steering force required for turning. In addition, a kingpin offset affects the steering force required for turning. The kingpin offset refers to the distance from the point of intersection of the extension line of the kingpin and the ground to the center of the tire contact patch. When the lawn tractor 100 turns, the first traveling wheel rotates around the kingpin. The moment of resistance of the ground to the steering is proportional to the magnitude of the kingpin offset. The smaller the kingpin offset, the smaller the moment of resistance to the steering. Therefore, a small kingpin offset can reduce the steering force and the impact of the ground on the steering assembly 60. In this example, the offset distance of the kingpin is equal to 5 cm. That is to say, the distance between the point of intersection of the extension line of the kingpin of the left first traveling wheel 931L and the plane 1f where the lawn tractor 100 is located and the point of intersection of the left first traveling wheel 931L and the plane 1f where the lawn mower 100 is located is equal to 5 cm; and the distance between the point of intersection of the extension line of the kingpin of the right first traveling wheel 931R and the plane 1f where the lawn tractor 100 is located and the point of intersection of the right first traveling wheel 931R and the plane 1f where the lawn mower 100 is located is equal to 5 cm.

In an example, the steering assembly 60 further includes a connecting rod mechanism for driving the second traveling assembly 932 to turn synchronously with the first traveling assembly 931. In an example, the steering assembly 60 further includes an electric power steering device mounted to the support rod 562. The electric power steering device includes a torque sensor, a controller, and a power assist electric motor. With the steering wheel 561 as an input end, the torque sensor converts the input torque into a linearly changing voltage signal. According to the voltage signal, the controller controls the power assist electric motor to rotate to provide steering assist. The rotation of an output shaft of the power assist electric motor is converted into the rotation of the support rod 562 by using a deceleration mechanism such as a turbine worm. The electric power steering device further includes an electromagnetic clutch. When the system of the power assist electric motor fails, the electromagnetic clutch is disconnected to ensure safety. In an example, the power assist electric motor may also act on the steering sprocket 61.

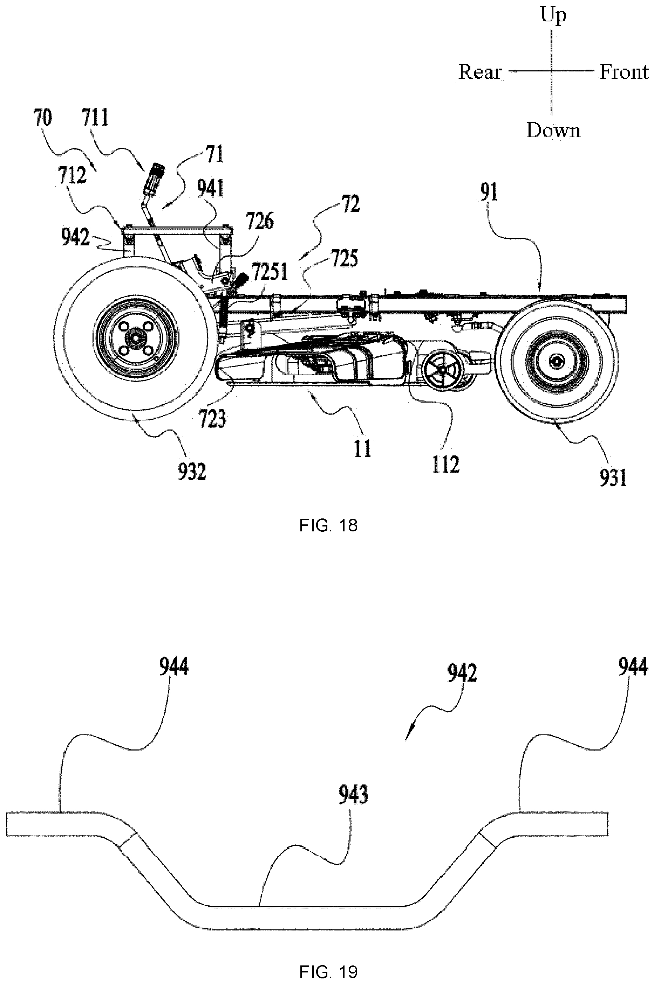

The seat 92 is mounted to the frame 91. The seat 92 is used for the user to sit on. The frame 91 carries the seat 92. The seat 92 is fixed on the frame through a seat support member 94. Specifically, the seat support member 94 includes a first metal tube 941 and a second metal tube 942. As shown in FIG. 19, the first metal tube 941 and the second metal tube 942 have the same shape and are inverted saddle-shaped arc-shaped metal tubes, where the metal tube is formed with a concave portion 943 in the middle and rising edges 944 at two ends. In this example, the first metal tube 941 and the second metal tube 942 are two identical components, and the first metal tube 941 and the second metal tube 942 are symmetrical about the middle plane 1d. The first metal tube 941 and the second metal tube 942 are parallel to each other below the seat 92 in the front and rear direction. The concave portions 943 of the first metal tube 941 and the second metal tube 942 are separately fixedly connected to the frame 91 through fixing members. For example, two points of the concave portion 943 of the first metal tube 941 are separately fixed on the first longitudinal beam 911 and the second longitudinal beam 912 through the fixing members, and the fixing members may be common parts such as bolts. The specific structures of the fixing members are not limited in the present invention. Since the diameters of the first metal tube 941 and the second metal tube 942 are relatively small and the seat cushion 921 of the seat 92 is set up in the concave portions 943 of the first metal tube 941 and the second metal tube 942, the seat 92 can be mounted lower, thereby reducing the center of gravity G of the whole machine and improving the stability of the lawn tractor 100. As shown in FIG. 2, in an example, the vertical distance H4 from the seat cushion 921 to the plane 1g where the frame 91 is located is less than or equal to 40 cm. In an example, the vertical distance H4 from the seat cushion 921 to the plane 1g where the frame 91 is located is less than or equal to 37 cm. In an example, the vertical distance H6 from the seat cushion 921 to the plane 1f where the lawn tractor 100 is located is less than 73 cm.

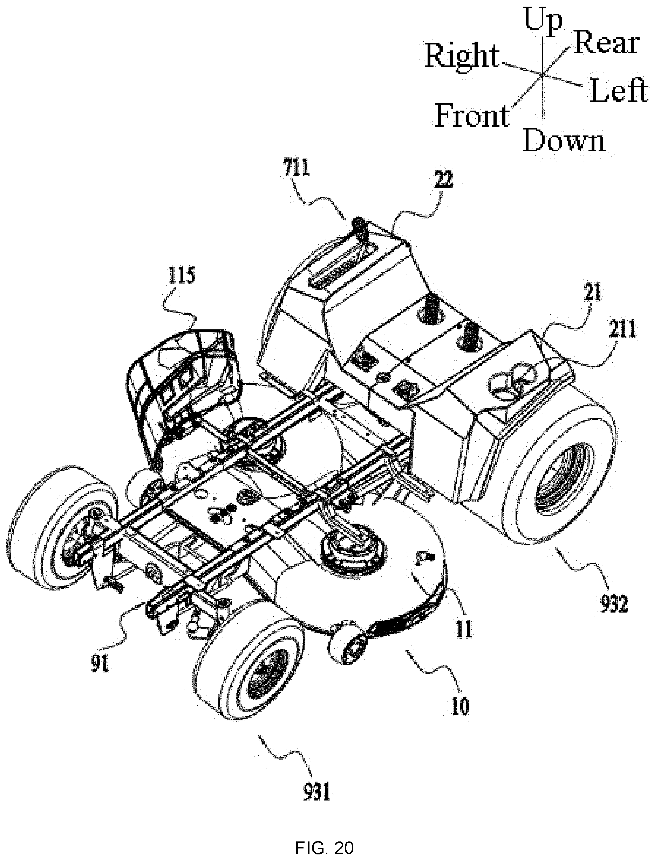

The rising edges 944 at two ends of the first metal tube 941 or the second metal tube 942 separately extend to the left and right sides of the lawn tractor 100. As shown in FIG. 18, two ends of the second metal tube 942 located at the rear are separately located above the left second traveling wheel 932L and the right second traveling wheel 932R. Therefore, as shown in FIG. 2, the seat 92 is disposed above the second traveling assembly 932. As shown in FIG. 20, the left cover 21 and the right cover 22 are mounted to the seat support member 94, or in other words, the left cover 21 and the right cover 22 are supported by the seat support member 94. It is worth noting that the support referred to here includes direct support and indirect support; and through assemblies mounted on the seat support member 94, the left cover 21 and the right cover 22 are supported or the covers at least partially covering the second traveling assembly 932 are supported, all of which fall within the scope of the present invention.

A first storage box 211 for storing objects is disposed on the left cover 21. Specifically, the first storage box 211 may be configured in a shape for placing water cups, which is convenient for the user to place the water cups. The first storage box 211 may also be configured in a rectangular shape, which is convenient for the user to place a mobile phone and other sundries. The first storage box 211 may be provided with a cover to prevent dust, grass clippings, and the like from entering the first storage box 211.

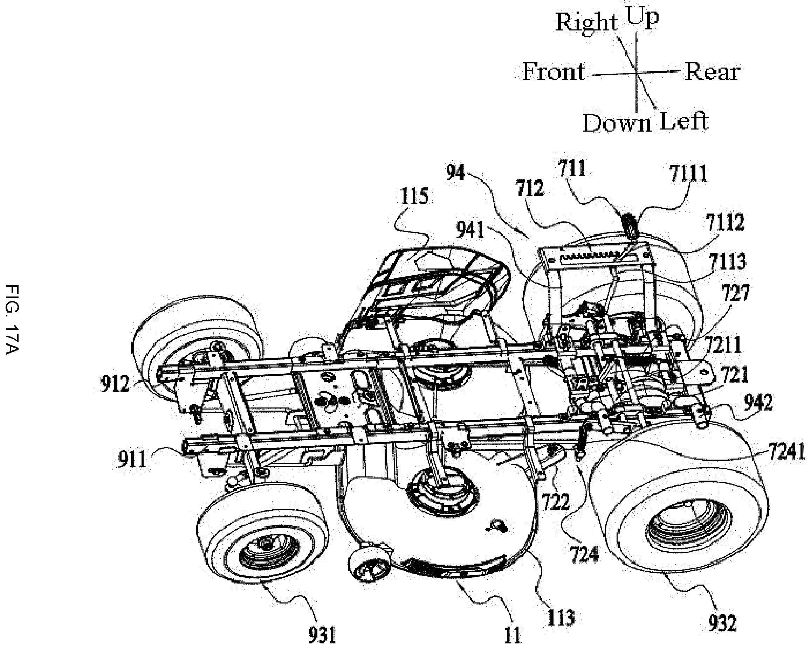

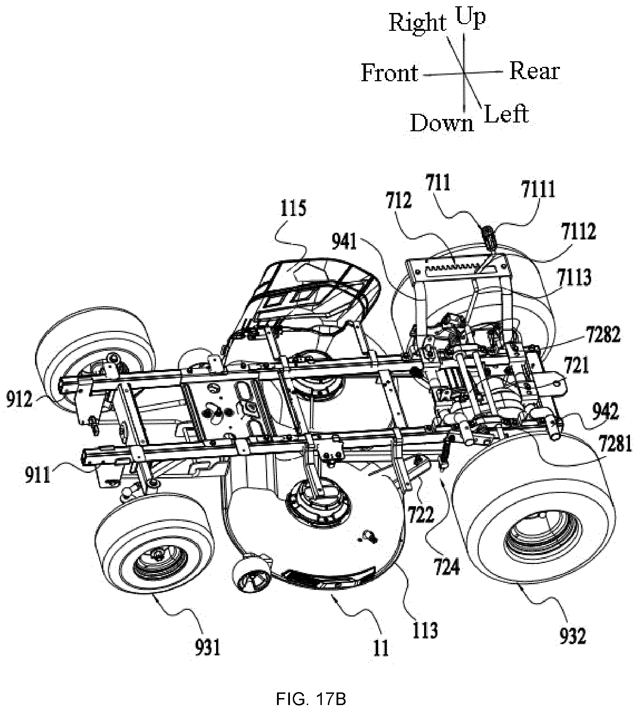

As shown in FIGS. 17A, 17B, and 18, the lawn tractor 100 further includes a cutting deck height adjustment assembly 70 for adjusting the height of the cutting deck 11 relative to the frame 91. The cutting deck height adjustment assembly 70 includes a gear assembly 71 and a linkage assembly 72. The gear assembly 71 includes an adjustment member 711 and a limiting member 712. The adjustment member 711 is used for the user to operate. The limiting member 712 includes multiple gears and is used for limiting the adjustment member 711 to a preset gear. The linkage assembly 72 connects the gear assembly 71 to the cutting deck 11. The gear assembly 71 is at least partially supported by the seat support member 94. Specifically, two ends of the limiting member 712 are separately fixed to the end of the rising edge 944 of the first metal tube 941 and the end of the rising edge 944 of the second metal tube 942, where the ends are on the same side. That is to say, the limiting member 712 is set up across the rising edge 944 of the first metal tube 941 and the rising edge 944 of the second metal tube 942. In this example, the two ends of the limiting member 712 are separately fixed to the right end of the rising edge 944 of the first metal tube 941 and the right end of the rising edge 944 of the second metal tube 942 through fixing members such as bolts. A groove for the adjustment member 711 to be exposed and move is formed in the right cover 22. When the user operates the adjustment member 711, the adjustment member 711 is movable to different preset gears relative to the limiting member 712. The linkage assembly 72 is driven by the adjustment member 711 to change the height of the cutting deck 11 so that the lawn tractor 100 has different cutting heights.

As shown in FIG. 17B, the adjustment member 711 includes an adjustment handle 7111, a gear portion 7112, and a bent portion 7113. The adjustment member 711 passes through the right cover. The adjustment handle 7111 extends upward. The adjustment handle 7111 is used for the user to operate. The gear portion 7112 mates with the limiting member 712 so that the gear portion 7112 stays at the preset gear. The bent portion 7113 is bent from the adjustment handle 7111 toward the body 100a so that the linkage assembly 72 is closer to the body 100a relative to the adjustment handle 7111 in the left and right direction. That is to say, the bent portion 7113 is bent from the adjustment handle 7111 toward the seat 92 so that the linkage assembly 72 is closer to the seat 92 relative to the adjustment handle 7111 in the left and right direction. The adjustment handle 7111 is disposed above the right cover 22 so that the user can adjust the height of the cutting deck while sitting on the seat 92 without getting off the lawn tractor. Moreover, since the bent portion 7113 is bent toward the seat 92 in the left and right direction, the adjustment handle 7111 is allowed to be farther away from the seat 92 than the adjustment handle 7111 in the case of no bent portion 7113. In this manner, when the user sits on the seat 92, enough space exists for hands and arms to turn the adjustment handle 7111 without being too cramped. At the same time, the dimension of the adjustment handle 7111 can be increased as much as possible so that the comfort of the user in operating the adjustment handle 7111 is not reduced. For example, the length of the adjustment handle 7111 is greater than or equal to 8 cm and less than or equal to 15 cm. In this manner, the dimension of the adjustment handle 7111 is basically the same as the width of the palm of the user, or the dimension of the adjustment handle 7111 is greater than the width of the palm of the user so that the adjustment handle 7111 is convenient for the user to hold.

When the user moves the adjustment member 711 to different preset gears relative to the limiting member 712, the adjustment member 711 drives a rotary connector 726 of the linkage assembly 72 to rotate. The linkage assembly 72 further includes a linkage rod 721, a first fixing member 722, a second fixing member 723, a first transmission assembly 724, and a second transmission assembly 725. The first fixing member 722 is fixedly connected to a sidewall 113 of the cutting deck 11, and the second fixing member 723 is fixedly connected to a top wall 112 of the cutting deck 11; or the first fixing member 722 is fixedly connected to the top wall 112 of the cutting deck 11, and the second fixing member 723 is fixedly connected to the side wall 113 of the cutting deck 11. An end of the second transmission assembly 725 is suspended from the second longitudinal beam 912, and the other end of the second transmission assembly 725 is fixedly connected to the rotary connector 726. The second fixing member 723 is fixedly connected to the second transmission assembly 725. When the second transmission assembly 725 moves, that is to say, when the rotary connector 726 rotates, the height of the second fixing member 723 changes accordingly, thereby changing the height of the cutting deck 11. An end of the first transmission assembly 724 is suspended from the first longitudinal beam 911, and the other end of the first transmission assembly 724 is fixedly connected to the linkage rod 721. The first fixing member 722 is fixedly connected to the first transmission assembly 724. When the first transmission assembly 724 moves, that is to say, when the linkage rod 721 rotates, the height of the first fixing member 722 changes accordingly, thereby changing the height of the cutting deck 11. In an example, the first transmission assembly 724 and the second transmission assembly 725 are connecting rod mechanisms. The first transmission assembly 724 may include a first spring 7241 for damping the vibration of the cutting deck 11 when the lawn tractor 100 is traveling and working. The second transmission assembly 725 may include a second spring 7251 for damping the vibration of the cutting deck 11 when the lawn tractor 100 is traveling and working.

The linkage rod 721 and the rotary connector 726 are fixedly connected and rotate synchronously. In an example, the rotary connector 726 rotates about the axis of the linkage rod 721. In this manner, when the rotary connector 726 drives the second transmission assembly 725 to move, the linkage rod 721 also drives the first transmission assembly 724 to move so that the first fixing member 722 and the second fixing member 723 apply forces to the top wall 112 and the sidewall 113 of the cutting deck 11 at the same time, the height of the cutting deck 11 is adjusted easily, and the connection stability between the cutting deck height adjustment assembly 70 and the cutting deck 11 is improved. In this example, the linkage rod 721 is rotatably mounted on the first longitudinal beam 911 and the second longitudinal beam 912. To reduce the operating force required by the user when lifting the height of the cutting deck 11, a power assist spring may be provided, where the power assist spring at least partially offsets the gravity of the cutting deck 11. In an example, referring to FIG. 17A, a tension spring 727 is hooked to the linkage rod 721. An end of the tension spring 727 is hooked to a protruding arm 7211 of the linkage rod 721, and the other end of the tension spring 727 is hooked to the seat support member, specifically, the second metal tube 942. When the user operates the adjustment member 711, the tension spring 727 contracts and drives the linkage rod 721 to rotate through the protruding arm 7211, thereby reducing the operating force required by the user when lifting the height of the cutting deck 11. In another example, referring to FIG. 17B, a biasing spring is disposed on the linkage rod 721. Specifically, the biasing spring includes a first torsion spring 7281 and a second torsion spring 7282. The first torsion spring 7281 and the second torsion spring 7282 are separately sleeved at two ends of the linkage rod 721. Two ends of the first torsion spring 7281 are separately hooked to the first longitudinal beam 911 and the first transmission assembly 724. Two ends of the second torsion spring 7282 are separately hooked to the second longitudinal beam 912 and the rotary connector 726. When the user operates the adjustment member 711, the biasing force of the first torsion spring 7281 drives the first transmission assembly 724 to move, so as to change the height of the first fixing member 722; at the same time, the biasing force of the second torsion spring 7282 drives the rotary connector 726 to rotate, so as to drive the second transmission assembly 725 to move and change the height of the second fixing member 723, thereby reducing the operating force required by the user when lifting the height of the cutting deck 11. The preceding power assist is achieved through a compact structure, thereby saving a relatively large mounting space.

The cutting deck 11 is connected to the grass collecting system 30 through a grass collecting tube 32. Further, a flip cover 115 is connected to the side surface of the cutting deck 11 and has a first position and a second position. When the flip cover 115 is at the first position, the lawn tractor 100 is in a grass discharge mode. At this time, the grass clippings cut by the cutting assembly 10 may be discharged to the right side of the lawn tractor 100 through the flip cover 115. When the flip cover 115 is at the second position, the cutting deck 11 may be connected to the grass collecting system 30 through the grass collecting tube 32. At this time, the lawn tractor 100 is in a grass collecting mode so that the grass clippings cut by the cutting assembly 10 may be discharged to a grass basket through the flip cover 115. In this example, with the support of the seat support member, the adjustment member 711 and the limiting member 712 are disposed on the right side of the seat 92. The adjustment member 711 passes through the right cover, and the adjustment handle 7111 extends upward so that the gear assembly 71 is spaced away from the flip cover 115 in both the front and rear direction and the up and down direction, thereby preventing the cutting deck height adjustment assembly 70 from interfering with the movement of the flip cover 115.

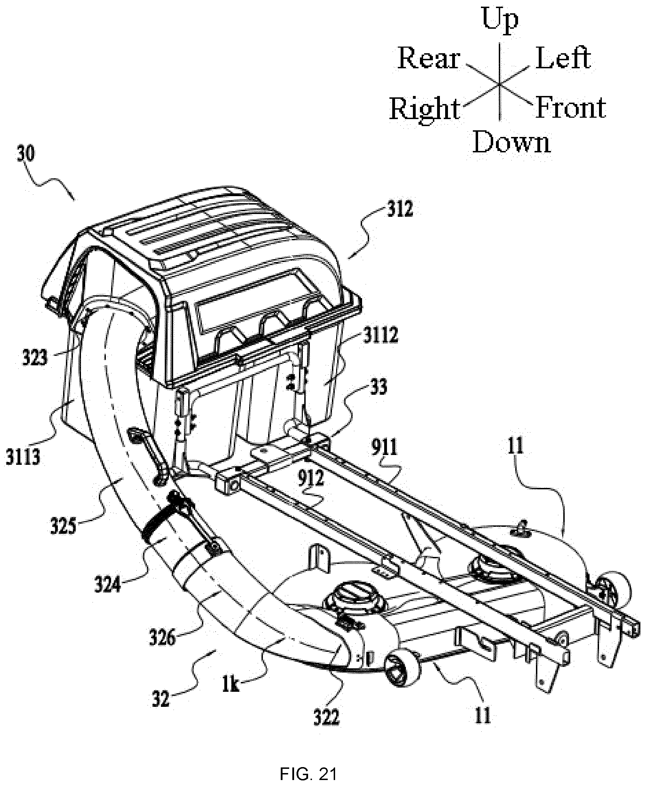

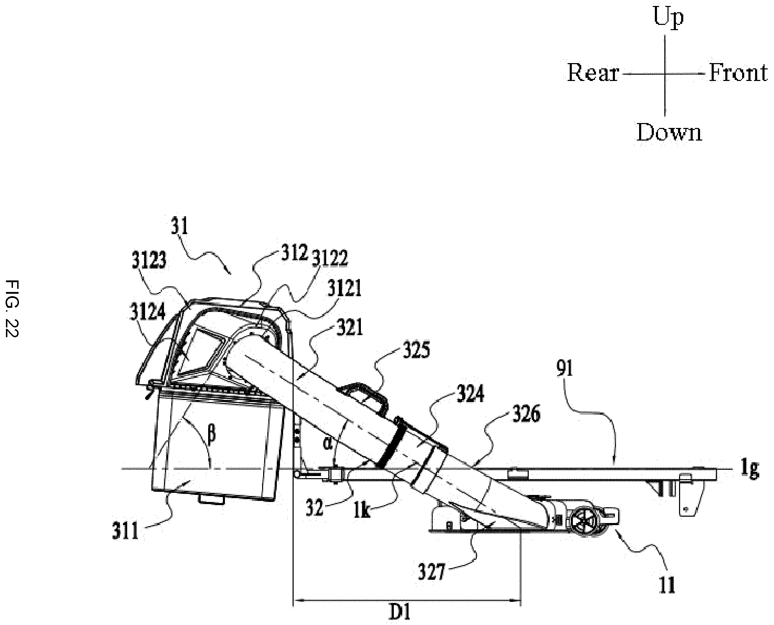

As shown in FIGS. 21 and 22, the grass collecting system 30 includes the grass collecting basket assembly 31, the grass collecting tube 32, and a mounting assembly 33. The grass collecting basket assembly 31 is disposed on the rear side of the seat 92. The grass collecting basket assembly 31 is used for collecting the grass clippings cut by the cutting assembly 10. The grass collecting tube 32 is used for connecting the cutting deck 11 to the grass collecting basket assembly 31. The mounting assembly 33 is used for mounting the grass collecting basket assembly 31 to the frame 91. As shown in FIGS. 21 and 22, the grass collecting basket assembly 31 includes a grass basket body 311 and a grass basket cover 312. The grass basket body 311 surrounds a grass collecting space for accommodating the grass clippings. The grass basket cover 312 covers an opening of the grass basket body 311 opened upward. The grass basket cover 312 and the grass basket body 311 may be connected together through a clamping structure.

The grass collecting tube 32 is formed with a channel 321 extending along an extension line 1k. The extension line 1k is basically a curve. That is to say, the channel 321 basically extends along the curve so that the channel 321 can smoothly guide the grass clippings to move from the cutting deck 11 to the grass basket body 311. The grass collecting tube 32 includes a first end surface 322 and a second end surface 323 disposed at two ends of the extension line 1k. The first end surface 322 of the grass collecting tube 32 is connected to the cutting deck 11 so that the mowing space 121 connects with the channel 321. The second end surface 323 of the grass collecting tube 32 is connected to the grass collecting basket assembly 31 so that the channel 321 connects with the grass collecting space in the grass collecting basket assembly 31. In an example, the distance D1 between the center point of the first end surface 322 and the grass collecting basket assembly 31 in the front and rear direction of the lawn tractor 100 is less than or equal to 130 cm. In an example, the distance D1 between the center point of the first end surface 322 and the grass collecting basket assembly 31 in the front and rear direction of the lawn tractor 100 is less than or equal to 110 cm. At the same time, to smoothly transfer the grass clippings from the bottom of the cutting deck 11 into the grass basket body 311 through the channel 321, the upward angle of the grass collecting tube 32 should not be too large. In an example, the included angle α formed by a line between the center point of the first end surface 322 and the center point of the second end surface 323 and the plane 1g where the frame 91 is located is greater than or equal to 20° and less than or equal to 35°. In an example, the included angle α formed by the line between the center point of the first end surface 322 and the center point of the second end surface 323 and the plane 1g where the frame 91 is located is 30°. While the low distance and slope are ensured, to allow the grass clippings to smoothly enter the grass collecting tube 32 from the cutting deck 11 without affecting the entry speed of the bottom grass clippings, a flat triangular region 327 is formed at an end of the grass collecting tube 32 connected to the cutting deck 11. In this manner, when entering the grass collecting tube 32, the grass clippings go straight forward without turning. At the same time, the flattened triangular region 327 lifts the lowest point of the grass collecting tube 32 and reduces the collision between the grass collecting tube 32 and ground debris. It is to be understood that the triangular region 327 means that the flattened portion presents a rough triangle. In fact, three sides of the region 327 are not necessarily straight lines. In an example, the area of the triangular region 327 is greater than or equal to 26 cm² and less than or equal to 31 cm².

The grass collecting tube 32 further includes an observation portion 324 for the user to observe to determine whether the grass collecting basket assembly 31 is filled with grass. The observation portion 324 surrounds the extension line 1k, that is to say, the extension line 1k passes through the observation portion 324. The observation portion 324 surrounds the extension line 1k, that is to say, the observation portion 324 is an annular window. In this manner, when the user sits on the seat 92, the user can conveniently determine whether the grass collecting basket assembly 31 is filled with grass; and when the user is on the right side of the lawn tractor 100, the user can also conveniently observe the observation portion 324 to determine whether the grass collecting basket assembly 31 is filled with grass. The length of the annular window in the direction of the extension line 1k is greater than or equal to 50 mm and less than or equal to 150 mm. In this manner, the dimension of the annular window is large enough so that the annular window is convenient for the user to observe. The observation portion 324 is made of see-through material so that the user can determine whether the grass collecting basket assembly 31 is filled with grass by directly observing whether there is grass in the grass collecting tube 32. As shown in FIG. 4, the observation portion 324 is disposed on the right side of the seat 92, and the grass collecting tube 32 extends from the right side of the cutting deck 11 to the right side of the grass collecting basket assembly 31. Alternatively, the observation portion 324 is disposed on the front side of the backrest 922. In this manner, when the user sits on the seat 92, the observation portion 324 is disposed on the right front of the user so that the user can see the observation portion 324 just with the peripheral vision when driving the lawn tractor 100 without looking back, thereby ensuring the driving safety.

In some examples, as shown in FIGS. 21 and 22, the grass collecting tube 32 includes a first connecting section 325 and a second connecting section 326. The first connecting section 325 is connected to the grass collecting basket assembly 31, and the second connecting section 326 is connected to the cutting deck 11. The first connecting section 325 and the second connecting section 326 may be made of the same material. The observation portion 324 is disposed between the first connecting section 325 and the second connecting section 326 and connects the first connecting section 325 to the second connecting section 326. The observation portion 324 may be made of another material different from the material of the first connecting section 325. The grass collecting tube 32 is divided into the first connecting section 325 and the second connecting section, thereby facilitating storage and transportation and reducing costs.

The grass basket body 311 is disposed behind the seat, and the grass basket body 311 protrudes backward from the seat 92 in the front and rear direction of the lawn tractor 100. In this manner, the grass basket body 311 can protect the seat 92 and the user so that the lawn tractor 100 has a more reliable structure and a longer service life. The grass basket body 311 at least partially protrudes backward from the rear bumper along the front and rear direction of the lawn tractor 100. In this manner, on the one hand, when the lawn tractor 100 hits an obstacle while traveling backward, a grass collecting basket device can play a certain buffering role, thereby protecting the seat; on the other hand, the grass collecting basket device protrudes backward from the rear bumper so that the center of gravity of the entire lawn tractor 100 shifts backward, thereby improving the stable performance of the lawn tractor 100. In addition, the grass basket body 311 protrudes from the backrest 922 of the seat along the left and right direction of the lawn tractor 100 so that the grass basket body 311 is not too narrow or too small to satisfy the grass collecting requirement.

In an example, as shown in FIG. 20, the grass basket body 311 includes a first grass basket portion 3112 and a second grass basket portion 3113. The first grass basket portion 3112 surrounds a first chamber, and the second grass basket portion 3113 surrounds a second chamber. The first grass basket portion 3112 and the second grass basket portion 3113 are symmetrical about a plane. The distance between the plane and the first longitudinal beam 911 is less than the distance between the plane and the second longitudinal beam 912, that is to say, the plane is not set at the middle position of the first longitudinal beam 911 and the second longitudinal beam 912 so that the grass basket body 311 protrudes to the left from the frame 91. Such a design allows enough space on the right side of the lawn tractor 100 to dispose the grass collecting tube 32 so that the grass collecting tube 32 is connected to the grass basket cover 312 from the right side of the grass collecting basket assembly 31. In another example, the grass basket body 311 includes only one large chamber, and the large chamber is closer to the left side of the lawn tractor 100 so that the grass basket body 311 protrudes to the left from the frame 91, and enough space exists on the right side of the lawn tractor 100 to dispose the grass collecting tube 32. Generally, for the sake of the dimension, flexibility, and safety of the whole machine, the grass basket body 311 does not protrude from the left second traveling wheel 932L and the right second traveling wheel 932R along the left and right direction of the lawn tractor 100.

The grass basket cover 312 includes a rotating portion 3123 and a fixing portion 3124. The rotating portion 3123 is rotationally connected to the mounting assembly 33, and the fixing portion 3124 is fixedly connected to the mounting assembly 33. When the rotating portion 3123 is opened by the user, the grass basket body 311 is open upward to allow the user to more directly observe the grass clippings inside the first grass basket portion 3112 and the second grass basket portion 3113. As shown in FIGS. 21 and 22, a grass collecting tube receiving opening 3121 into which the grass collecting tube 32 is inserted is further formed on the fixing portion 3124 of the grass basket cover 312, and an annular rubber ring 3122 is further disposed at the joint between the grass collecting tube receiving opening 3121 and the grass collecting tube. After the grass collecting tube 32 extends into the grass collecting tube receiving opening 3121, the rubber ring 3122 surrounds the grass collecting tube 32, thereby achieving a better shock absorbing effect. The fixing portion 3124 of the grass basket cover 312 protrudes from the grass basket body 311. Further, the grass collecting tube receiving opening 3121 protrudes from the grass basket body 311 and tilts forward and downward so that the grass collecting tube 32 can be connected to the grass collecting basket assembly 31 relatively smoothly, thereby improving the grass collecting efficiency. In an example, the included angle β formed by a connecting surface of the grass collecting tube receiving opening 3121 and the grass collecting tube 32 and the plane 1g where the frame 91 is located is greater than or equal to 50° and less than or equal to 70°. In an example, the included angle β formed by a connecting surface of the grass collecting tube receiving opening 3121 and the grass collecting tube 32 and the plane 1g where the frame 91 is located is 60°.

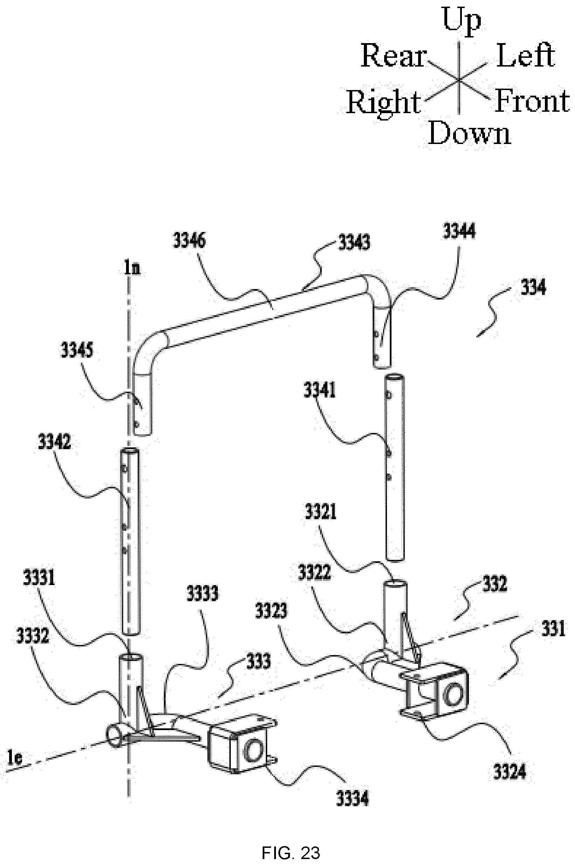

As shown in FIG. 23, the mounting assembly 33 includes a mounting seat 331 and a connecting rod assembly 334. In an example, the mounting seat 331 includes a first mounting seat 332 and a second mounting seat 333. The first mounting seat 332 and the second mounting seat 333 are symmetrical. The first mounting seat 332 is mounted to the first longitudinal beam 911, the second mounting seat 333 is mounted to the second longitudinal beam 912, the first mounting seat 332 is further formed with a first mounting hole 3321, and the second mounting seat 333 is further formed with a second mounting hole 3331. The connecting rod assembly 334 includes a first connecting rod 3341 detachably inserted into the first mounting hole 3321 and a second connecting rod 3342 detachably inserted into the second mounting hole 3331. The connecting rod assembly 334 further includes an intermediate rod 3343, where the intermediate rod 3343 is disposed between the first connecting rod 3341 and the second connecting rod 3342 to connect the first connecting rod 3341 to the second connecting rod 3342. The first connecting rod 3341 and the second connecting rod 3342 are independent of each other and correspond to the first mounting hole 3321 and the second mounting hole 3331, respectively, making the entire grass collecting system 30 easier to mount. In this manner, when the grass collecting basket assembly 31 is mounted, the first connecting rod 3341 may be inserted into the first mounting hole 3321, the second connecting rod 3342 may be inserted into the second mounting hole 3331, and then the intermediate rod 3343 connects the first connecting rod 3341 to the second connecting rod 3342 so that the first connecting rod 3341 and the second connecting rod 3342 are fixedly connected, and the connecting rod assembly 334 can be stably mounted to the frame 91. Finally, the fixing portion 3124 of the grass basket cover 312 is connected to the connecting rod assembly 334 so that the grass collecting basket assembly 31 can be mounted to the frame 91 through simple operations.

The first connecting rod 3341 extends along a straight line, and the second connecting rod 3342 extends along a direction parallel to the extension direction of the first connecting rod 3341. In this example, the first connecting rod 3341 and the second connecting rod 3342 both extend along a vertical straight line 1n, the vertical straight line 1n is parallel to the middle plane 1d, and the vertical straight line 1n is perpendicular to the transverse straight line 1e. The intermediate rod 3343 is U-shaped. The intermediate rod 3343 includes a left connecting portion 3344, a right connecting portion 3345, and an intermediate portion 3346. The left connecting portion 3344 is connected to the first connecting rod 3341, the right connecting portion 3345 is connected to the second connecting rod 3342, and the intermediate portion 3346 connects the left connecting portion 3344 to the right connecting portion 3345. In an example, the left connecting portion 3344 is connected to the first connecting rod 3341 through screws, and the right connecting portion 3345 is connected to the second connecting rod 3342 through screws. In this manner, on the one hand, the intermediate rod 3343 can connect the first connecting rod 3341 to the second connecting rod 3342 so that the first connecting rod 3341 and the second connecting rod 3342 are relatively fixed in the direction of the transverse straight line 1e; on the other hand, the intermediate rod 3343 can strengthen the mounting assembly 33, thereby avoiding the problem of insufficient strength of the first connecting rod 3341 and the second connecting rod 3342.

The first mounting seat 332 includes a first coupling portion 3324, a first mounting post 3322, and a first extension portion 3323, and the second mounting seat 333 includes a second coupling portion 3334, a second mounting post 3332, and a second extension portion 3333. The first mounting post 3322 is formed with the first mounting hole 3321, and the second mounting post 3332 is formed with the second mounting hole 3331. The first coupling portion 3324 is clamped on the first longitudinal beam 911. In an example, the first coupling portion 3324 is pressed on the first longitudinal beam 911 by using a long screw. The second coupling portion 3334 is clamped on the second longitudinal beam 912. In an example, the second coupling portion 3334 is pressed on the second longitudinal beam 912 by using a long screw. The first extension portion 3323 extends from the first coupling portion 3324 in a direction away from the first longitudinal beam 911, for example, to the left side and the rear side of the lawn tractor 100. In an example, the first extension portion 3323 is a metal tube bent at 90 degrees. The second extension portion 3333 extends from the second coupling portion 3324 in a direction away from the second longitudinal beam 912, for example, to the right side and the rear side of the lawn tractor 100. In an example, the second extension portion 3333 is a metal tube bent at 90 degrees. The first mounting seat 332 and the second mounting seat 333 extend to the two sides and the rear side of the lawn tractor 100, which is conducive to increasing the mounting space, thereby facilitating the installation operation, widening the distance between the left and right support structures, and increasing the stability. The first coupling portion 3324, the first mounting post 3322, and the first extension portion 3323 are welded together, and the second coupling portion 3334, the second mounting post 3332, and the second extension portion 3333 are welded together. A stiffener may be formed at the joint between the first mounting post 3322 and the first extension portion 3323, and a stiffener may be formed at the joint between the second mounting post 3332 and the second extension portion 3333. In this manner, the strength of the first mounting seat 332 and the second mounting seat 333 can be improved. In this manner, the first mounting seat 332 and the second mounting seat 333 bear the weight of the grass collecting system 30 located on the rear side of the seat 92, and the stress borne by the first mounting seat 332 and the second mounting seat 333 is relatively evenly distributed, thereby improving the service life of the lawn tractor 100.

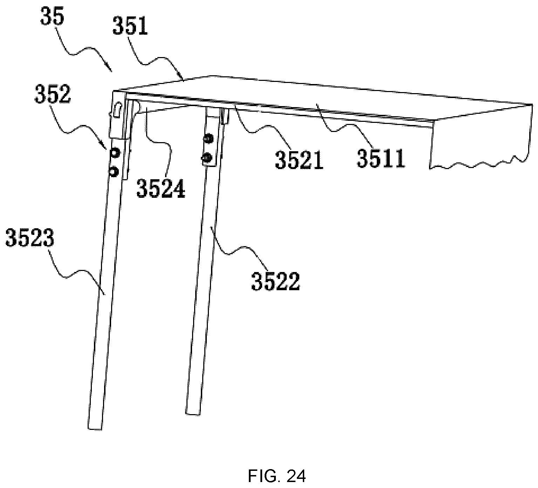

In this example, the structures of the first mounting seat 332 and the second mounting seat 333 are simple, and the first mounting seat 332 and the second mounting seat 333 are symmetrical parts. The first mounting seat is formed with the first mounting hole 3321, and the second mounting seat is formed with the second mounting hole 3331. The first mounting hole 3321 and the second mounting hole 3331 may be used for the grass collecting system 30 to be mounted to the frame 91. The first mounting seat 332 and the second mounting seat 333 are highly versatile and are also applicable to an awning assembly 35 shown in FIG. 24. The awning assembly 35 includes a sun shade assembly 351 and a mounting assembly 352 for mounting the sun shade assembly 351 to the lawn tractor 100. The sun shade assembly 351 includes a sun shade cover 3511. The mounting assembly 352 includes a support seat 3521 and a connecting rod assembly. The support seat 3521 is used for supporting the sun shade cover 3511. The connecting rod assembly includes a first connecting rod 3522, a second connecting rod 3523, and an intermediate rod 3524. The support seat 3521 is connected to the connecting rod assembly, and the first connecting rod 3522 and the second connecting rod 3523 are detachably connected and can be separated from each other. In some examples, the intermediate rod 3524 is separately detachably connected to the first connecting rod 3522 and the second connecting rod 3523. The first connecting rod 3522 and the second connecting rod 3523 are inserted into the first mounting hole 3321 and the second mounting hole 3331, respectively so that the sun shade assembly 351 is mounted to the frame 91.

## Claims

1. A riding vehicle (100), comprising:
a seat (92) for a user to sit on;
a frame (91) for supporting the seat;
a traveling assembly (93) for driving the riding vehicle to travel;
a power supply assembly (96) for supplying power to at least the traveling assembly; and
a front cover (23) located on a front part of the riding vehicle and used for covering the power supply assembly; wherein
the front cover covers and forms a front accommodation cavity (231); **characterized in that**
the power supply assembly comprises at least two battery packs (161), and the at least two battery packs are detachably disposed in the front accommodation cavity;
the traveling assembly comprises at least a first traveling wheel (931) disposed on the front part of the riding vehicle, and a height difference (H1) between a highest point of a battery pack farthest from the seat among the at least two battery packs and a center point of the first traveling wheel is less than or equal to 45 cm;
the front cover is further formed with a storage space (234) at least partially disposed above the power supply assembly;
a partition is disposed between the storage space and the power supply assembly;
a center (G) of gravity of the riding vehicle is lower than a seat cushion (921) of the seat in an up and down direction; and
the at least two battery packs are adapted to other power tools for supplying power to the other power tools.

2. The riding vehicle of claim 1, wherein the power supply assembly comprises six battery packs (161) disposed in the front accommodation cavity.

3. The riding vehicle of claim 1, wherein the power supply assembly further comprises a built-in cell module (163).

4. The riding vehicle of claim 3, wherein the built-in cell module is disposed behind the at least two battery packs.

5. The riding vehicle of claim 1, wherein a vertical distance (H3) between a highest point of a battery pack farthest from the seat among the at least two battery packs and a plane where the riding vehicle is located is less than or equal to 63 cm.

6. The riding vehicle of claim 1, wherein the first traveling wheel is at least partially located in front of the at least two battery packs in a front and rear direction of the riding vehicle.

7. The riding vehicle of claim 1, having a middle plane (1d), wherein the at least two battery packs are symmetrically distributed about the middle plane.

8. The riding vehicle of claim 1, wherein the power supply assembly comprises a first battery holder (162), the first battery holder is formed with a first groove (162a), and one of the at least two battery packs is capable of being detachably inserted into the first groove along an extension direction of the first groove and pulled out from the first groove along the extension direction of the first groove.

9. The riding vehicle of claim 1, wherein the riding vehicle is a lawn tractor, the lawn tractor comprises a cutting assembly (10) comprising a cutting deck (11) and a mowing element (12) for mowing grass, the mowing element is at least partially accommodated in the cutting deck, and the cutting assembly is mounted to the frame.

10. The riding vehicle of claim 9, wherein the lawn tractor further comprises a control circuit board (952) for controlling at least the cutting assembly and the traveling assembly, and at least part of the control circuit board is disposed between the seat and the power supply assembly.

11. The riding vehicle of claim 9, wherein the center (G) of gravity of the riding vehicle is located between the control circuit board and the seat in a front and rear direction.

12. The riding vehicle of claim 9, wherein the traveling assembly comprises a first traveling assembly (931) and a second traveling assembly (932), the first traveling assembly comprises a left first traveling wheel (931L) and a right first traveling wheel (931R) and the first traveling assembly is at least partially located in front of the power supply assembly in a front and rear direction of the lawn tractor.

## Patentansprüche

1. Ein Aufsitzfahrzeug (100), umfassend:
einen Sitz (92), auf dem ein Benutzer sitzen kann;
einen Rahmen (91) zum Stützen des Sitzes;
eine Fahranordnung (93) zum Antreiben des Aufsitzfahrzeugs zum Fahren;
eine Stromversorgungsanordnung (96) zum Versorgen zumindest der Fahranordnung mit Energie; und
eine Frontabdeckung (23), die an einem Vorderteil des Aufsitzfahrzeugs angeordnet ist und zum Abdecken der Stromversorgungsanordnung verwendet wird; wobei
die Frontabdeckung einen vorderen Aufnahmeraum (231) abdeckt und ausbildet; **dadurch gekennzeichnet, dass**
die Stromversorgungsanordnung mindestens zwei Akkupacks (161) umfasst, und die mindestens zwei Akkupacks lösbar in dem vorderen Aufnahmeraum angeordnet sind;
die Fahranordnung zumindest ein erstes Laufrad (931) umfasst, das an dem Vorderteil des Aufsitzfahrzeugs angeordnet ist, und eine Höhendifferenz (H1) zwischen einem höchsten Punkt eines von dem Sitz am weitesten entfernten Akkupacks unter den mindestens zwei Akkupacks und einem Mittelpunkt des ersten Laufrads kleiner als oder gleich 45 cm ist;
die Frontabdeckung ferner mit einem Stauraum (234) ausgebildet ist, der zumindest teilweise oberhalb der Stromversorgungsanordnung angeordnet ist;
eine Trennwand zwischen dem Stauraum und der Stromversorgungsanordnung angeordnet ist;
ein Schwerpunkt (G) des Aufsitzfahrzeugs in einer Oben-Unten-Richtung niedriger als ein Sitzpolster (921) des Sitzes liegt; und
die mindestens zwei Akkupacks an andere Elektrowerkzeuge angepasst sind, um die anderen Elektrowerkzeuge mit Energie zu versorgen.

2. Das Aufsitzfahrzeug nach Anspruch 1, wobei die Stromversorgungsanordnung sechs in dem vorderen Aufnahmeraum angeordnete Akkupacks (161) umfasst.

3. Das Aufsitzfahrzeug nach Anspruch 1, wobei die Stromversorgungsanordnung ferner ein eingebautes Zellenmodul (163) umfasst.

4. Das Aufsitzfahrzeug nach Anspruch 3, wobei das eingebaute Zellenmodul hinter den mindestens zwei Akkupacks angeordnet ist.

5. Das Aufsitzfahrzeug nach Anspruch 1, wobei ein vertikaler Abstand (H3) zwischen einem höchsten Punkt eines von dem Sitz am weitesten entfernten Akkupacks unter den mindestens zwei Akkupacks und einer Ebene, auf der das Aufsitzfahrzeug angeordnet ist, kleiner als oder gleich 63 cm ist.

6. Das Aufsitzfahrzeug nach Anspruch 1, wobei das erste Laufrad in einer Vorder-Hinter-Richtung des Aufsitzfahrzeugs zumindest teilweise vor den mindestens zwei Akkupacks angeordnet ist.

7. Das Aufsitzfahrzeug nach Anspruch 1, mit einer Mittelebene (1d), wobei die mindestens zwei Akkupacks symmetrisch bezüglich der Mittelebene verteilt sind.

8. Das Aufsitzfahrzeug nach Anspruch 1, wobei die Stromversorgungsanordnung einen ersten Batteriehalter (162) umfasst, der erste Batteriehalter mit einer ersten Nut (162a) ausgebildet ist, und einer der mindestens zwei Akkupacks entlang einer Erstreckungsrichtung der ersten Nut lösbar in die erste Nut eingeführt und entlang der Erstreckungsrichtung der ersten Nut aus der ersten Nut herausgezogen werden kann.

9. Das Aufsitzfahrzeug nach Anspruch 1, wobei das Aufsitzfahrzeug ein Rasentraktor ist, der Rasentraktor eine Schneidanordnung (10) umfasst, die ein Mähdeck (11) und ein Mähelement (12) zum Mähen von Gras umfasst, das Mähelement zumindest teilweise in dem Mähdeck aufgenommen ist, und die Schneidanordnung an dem Rahmen montiert ist.

10. Das Aufsitzfahrzeug nach Anspruch 9, wobei der Rasentraktor ferner eine Steuerleiterplatte (952) zum Steuern zumindest der Schneidanordnung und der Fahranordnung umfasst, und zumindest ein Teil der Steuerleiterplatte zwischen dem Sitz und der Stromversorgungsanordnung angeordnet ist.

11. Das Aufsitzfahrzeug nach Anspruch 9, wobei der Schwerpunkt (G) des Aufsitzfahrzeugs in einer Vorder-Hinter-Richtung zwischen der Steuerleiterplatte und dem Sitz angeordnet ist.

12. Das Aufsitzfahrzeug nach Anspruch 9, wobei die Fahranordnung eine erste Fahranordnung (931) und eine zweite Fahranordnung (932) umfasst, die erste Fahranordnung ein linkes erstes Laufrad (931L) und ein rechtes erstes Laufrad (931R) umfasst, und die erste Fahranordnung in einer Vorder-Hinter-Richtung des Rasentraktors zumindest teilweise vor der Stromversorgungsanordnung angeordnet ist.

## Revendications

1. Un véhicule autoporté (100), comprenant :
un siège (92) sur lequel un utilisateur peut s'asseoir ;
un châssis (91) pour supporter le siège ;
un ensemble de déplacement (93) pour entraîner le véhicule autoporté à se déplacer ;
un ensemble d'alimentation électrique (96) pour alimenter en énergie au moins l'ensemble de déplacement ; et
un couvercle avant (23) situé sur une partie avant du véhicule autoporté et utilisé pour recouvrir l'ensemble d'alimentation électrique ; dans lequel
le couvercle avant recouvre et forme une cavité de logement avant (231) ; **caractérisé en ce que**
l'ensemble d'alimentation électrique comprend au moins deux blocs-batteries (161), et lesdits au moins deux blocs-batteries sont disposés de manière amovible dans la cavité de logement avant ;
l'ensemble de déplacement comprend au moins une première roue de déplacement (931) disposée sur la partie avant du véhicule autoporté, et une différence de hauteur (H1) entre un point le plus haut d'un bloc-batterie le plus éloigné du siège parmi lesdits au moins deux blocs-batteries et un point central de la première roue de déplacement est inférieure ou égale à 45 cm ;
le couvercle avant est en outre formé avec un espace de stockage (234) disposé au moins partiellement au-dessus de l'ensemble d'alimentation électrique ;
une cloison est disposée entre l'espace de stockage et l'ensemble d'alimentation électrique ;
un centre (G) de gravité du véhicule autoporté est plus bas qu'un coussin de siège (921) du siège dans une direction haut-bas ; et
lesdits au moins deux blocs-batteries sont adaptés à d'autres outils électriques afin d'alimenter en énergie lesdits autres outils électriques.

2. Le véhicule autoporté selon la revendication 1, dans lequel l'ensemble d'alimentation électrique comprend six blocs-batteries (161) disposés dans la cavité de logement avant.

3. Le véhicule autoporté selon la revendication 1, dans lequel l'ensemble d'alimentation électrique comprend en outre un module de cellules intégré (163).

4. Le véhicule autoporté selon la revendication 3, dans lequel le module de cellules intégré est disposé derrière lesdits au moins deux blocs-batteries.

5. Le véhicule autoporté selon la revendication 1, dans lequel une distance verticale (H3) entre un point le plus haut d'un bloc-batterie le plus éloigné du siège parmi lesdits au moins deux blocs-batteries et un plan sur lequel le véhicule autoporté est situé est inférieure ou égale à 63 cm.

6. Le véhicule autoporté selon la revendication 1, dans lequel la première roue de déplacement est située au moins partiellement devant lesdits au moins deux blocs-batteries dans une direction avant-arrière du véhicule autoporté.

7. Le véhicule autoporté selon la revendication 1, ayant un plan médian (1d), dans lequel lesdits au moins deux blocs-batteries sont répartis symétriquement par rapport au plan médian.

8. Le véhicule autoporté selon la revendication 1, dans lequel l'ensemble d'alimentation électrique comprend un premier support de batterie (162), le premier support de batterie est formé avec une première rainure (162a), et l'un desdits au moins deux blocs-batteries peut être introduit de manière amovible dans la première rainure le long d'une direction d'extension de la première rainure et retiré de la première rainure le long de la direction d'extension de la première rainure.

9. Le véhicule autoporté selon la revendication 1, dans lequel le véhicule autoporté est un tracteur tondeuse, le tracteur tondeuse comprend un ensemble de coupe (10) comprenant un plateau de coupe (11) et un élément de tonte (12) destiné à tondre de l'herbe, l'élément de tonte étant reçu au moins partiellement dans le plateau de coupe, et l'ensemble de coupe étant monté sur le châssis.

10. Le véhicule autoporté selon la revendication 9, dans lequel le tracteur tondeuse comprend en outre une carte de circuit de commande (952) pour commander au moins l'ensemble de coupe et l'ensemble de déplacement, et au moins une partie de la carte de circuit de commande est disposée entre le siège et l'ensemble d'alimentation électrique.

11. Le véhicule autoporté selon la revendication 9, dans lequel le centre (G) de gravité du véhicule autoporté est situé entre la carte de circuit de commande et le siège dans une direction avant-arrière.

12. Le véhicule autoporté selon la revendication 9, dans lequel l'ensemble de déplacement comprend un premier ensemble de déplacement (931) et un deuxième ensemble de déplacement (932), le premier ensemble de déplacement comprend une première roue de déplacement gauche (931L) et une première roue de déplacement droite (931R), et le premier ensemble de déplacement est situé au moins partiellement devant l'ensemble d'alimentation électrique dans une direction avant-arrière du tracteur tondeuse.
